(19) Europäisches Patentamt
European Patent Office
Office européen des brevets

(11) **EP 2 735 831 A1**

(12) **EUROPEAN PATENT APPLICATION**
published in accordance with Art. 153(4) EPC

(43) Date of publication:
**28.05.2014 Bulletin 2014/22**

(51) Int Cl.:
*F26B 17/04* (2006.01)    *B65G 17/12* (2006.01)
*F23K 1/00* (2006.01)    *F23K 1/04* (2006.01)
*F26B 3/08* (2006.01)

(21) Application number: **12814653.7**

(22) Date of filing: **18.07.2012**

(86) International application number:
**PCT/JP2012/068214**

(87) International publication number:
**WO 2013/012008 (24.01.2013 Gazette 2013/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.07.2011  JP 2011157920**

(71) Applicant: **Babcock-Hitachi Kabushiki Kaisha Chiyoda-ku Tokyo 101-0021 (JP)**

(72) Inventors:
  • **SUGASAWA Mitsugu**
    **Kure-shi**
    **Hiroshima 737-8508 (JP)**
  • **YOSHIZAKO Hidehisa**
    **Kure-shi**
    **Hiroshima 737-0029 (JP)**
  • **MIYATA Terufumi**
    **Kure-shi**
    **Hiroshima 737-0029 (JP)**
  • **OKADA Takahiro**
    **Kure-shi**
    **Hiroshima 737-8508 (JP)**
  • **TAOKA Yoshinori**
    **Kure-shi**
    **Hiroshima 737-8508 (JP)**
  • **SATO Shunichi**
    **Kure-shi**
    **Hiroshima 737-8508 (JP)**

(74) Representative: **Jansen, Cornelis Marinus et al V.O.**
    **Johan de Wittlaan 7**
    **2517 JR Den Haag (NL)**

(54) **DRYING CONVEYER, AND THERMAL ELECTRIC POWER GENERATION SYSTEM PROVIDED WITH SAME**

(57)    [Problem] To provide a drying conveyer apparatus capable of efficiently and uniformly drying coarse particles.

[Solution] The present invention is characterized in that a gas get portion (29) is provided on a bottom part of a conveyance member (25), a wind box (35) is provided for supplying drying gas (49) from blow the conveyance member (25), an object to be conveyed (2) is inputted within the conveyance member (25), the drying gas (35) is jetted from the gas jet portion (29) into the conveyance member (25) when the conveyance member (25) passes over the wind box (35), and the object to be conveyed (2) is dried while a fluidized bed thereof is formed.

FIG. 1

**Description**

TECHNICAL FIELD

The present invention relates to a drying conveyer apparatus for drying and dehumidifying particles, powder, chips or fragments such as coal, sludge, foodstuff, wood chips, municipal waste, etc. (these will be hereinafter collectively referred to as coarse particles) while conveying the coarse particles. Particularly, it relates to a drying conveyer apparatus capable of efficiently and uniformly drying coarse particles such as brown coal.

BACKGROUND ART

Brown coal with a high moisture content is dried in order to enhance the combustion efficiency thereof. A fluidized bed type drying device or a rotary kiln type drying device has been heretofore known as a device for drying the brown coal.

In the fluidized bed type drying device, coal is crushed by a crusher and coal particles are then conveyed onto a fluidized bed by steam. The coal particles are fluidized and heated by the steam. The dried coal particles are discharged from the fluidized bed to the outside.

On the other hand, fine coal particles are conveyed to above the fluidized bed together with the steam, captured by a cyclone separator, and returned onto the fluidized bed again. In addition, the steam pressurized by a compressor is heated to be used as heating steam, and finally discharged as water to the outside of the system.

The flow of coal particles is based on an overflow system having no quantitativity. Therefore, dried coal particles are measured by a coal feeder after being stored in a hopper.

In the rotary kiln type drying device, coal is inputted from above a rotary kiln, and coal particles are stirred inside the kiln. Heat transfer tubes are arranged inside the kiln, and steam passes inside the heat transfer tubes. Thus, the coal particles passing among the heat transfer tubes are dried by the heat of the steam.

The dried coal particles are discharged gradually toward an outlet due to the inclination of the kiln while rotated. The used steam turns into water due to heat exchange and is recovered as condensed water.

In this drying device, the coal amount contained inside the kiln varies depending on the size of dried coal particles, the degree of dryness, etc., and there is no quantitativity in the outlet of the rotary kiln. Therefore, in the same manner as in the fluidized bed type drying device, the dried coal particles are measured by a coal feeder after being stored in a hopper.

In the background-art apparatus, as described above, a device for drying coal and a device (coal feeder) for measuring the coal are required separately. Thus, the equipment cost and the running cost increase. In addition, a space for the drying device and a space for the measuring device are required for installation of the apparatus, causing demerits such as a demerit that the apparatus becomes large in size as a whole.

In addition, drying device-including coal conveyer apparatuses have been proposed in JP-A-61-240024 (Patent Literature 1), JP-A-59-107115 (Patent Literature 2), etc. in the background art.

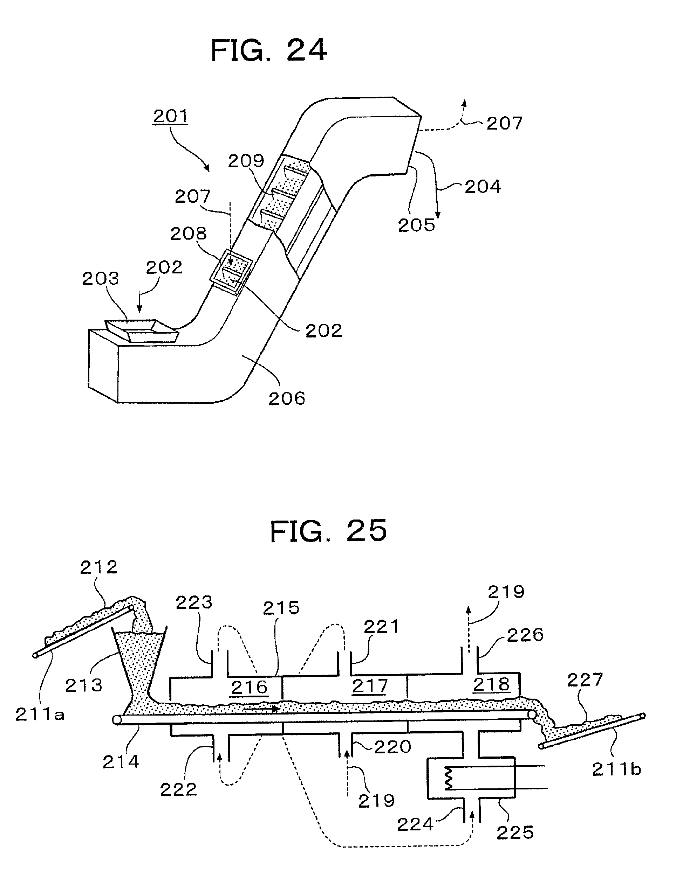

Fig. 24 is a perspective view of the aforementioned drying device-including coal conveyer apparatus proposed in JP-A-61-240024 (Patent Literature 1).

As shown in Fig. 24, a coal conveyer 201 is covered with a conveyer trunk 206, and a coal input port 203 through with undried coal particles 202 are inputted is provided in an upper face of the conveyer trunk 206 and near one end part thereof, while a coal discharge port 205 from which dried coal particles 204 are discharged is further provided in the other end face of the conveyer trunk 206. In addition, an exhaust gas supply port 208 through which high-temperature exhaust gas 207 from a boiler apparatus (not shown) is supplied is provided in the upper face of the conveyer trunk 206 and at the middle thereof.

As shown in Fig. 24, the undried coal particles 202 are inputted from the coal input port 203, accumulated within a bucket 209 of the coal conveyer 201, and conveyed upward by the coal conveyer 201. On the way of the conveyance, the high-temperature exhaust gas 207 is supplied into the conveyer trunk 206 from the exhaust gas supply port 208. The exhaust gas 207 fed thus is passed inside the conveyer trunk 206 and discharged from the coal discharge port 205.

During this time, moisture adhering to the undried coal particles 202 conveyed inside the conveyer trunk 206 is exposed to the exhaust gas 207 and evaporated. Thus, the coal particles 202 are discharged as the dried coal particles 204 from the coal discharge port 205, and inputted into a not-shown coal bunker. In addition, the evaporated moisture is designed to be discharged to the atmosphere from the coal discharge port 205 together with the exhaust gas 207.

Fig. 25 is a schematic configuration diagram of the drying device-including coal conveyer apparatus proposed in JP-A-59-107115 (Patent Literature 2).

As shown in Fig. 25, undried coal particles 212 conveyed by a conveyer 211a are stored in a hopper 213 once, then inputted onto a conveyer 214 and conveyed in an arrow direction.

The conveyer 214 is covered with a hood 215. By this hood 215, a first drying chamber 206, a second drying chamber 217 and a cooling chamber 218 are sectioned and formed from the upstream side to the downstream side in the conveyance direction (arrow direction) of the coal particles 212.

High-temperature exhaust gas 219 sent from a combustion device (not shown) enters the second drying chamber 217 through an inflow port 220 on the lower side, moves upward inside the second drying chamber 217 and is discharged from a discharge port 221 on the upper side.

Successively, the exhaust gas 219 next enters the first drying chamber 206 through an inflow port 222 on the lower side, moves upward inside the first drying chamber 206 and is discharged from a discharge port 223 on the upper side. The undried coal particles 212 passing inside the first drying chamber 206 and the second drying chamber 217 are heated and dried.

The exhaust gas 219 discharged from the discharge port 223 of the first drying chamber 206 next enters the cooling chamber 218 through an inflow port 224 on the lower side. The exhaust gas 219 is cooled by a cooler 225. The exhaust gas 219 cooled to a low temperature moves upward inside the cooling chamber 218 so as to cool the coal particles which is being conveyed. The cooled coal particles are conveyed as dried and cooled coal particles 227 to the next conveyer 211b. On the other hand, the exhaust gas 219 cooled to a low temperature is designed to be conveyed from a discharge port 226 to a gas processing device (not shown) of the combustion device so as to be subjected to gas processing.

In addition, as other literatures in the citation list, for example, there are Japanese Examined Patent Publication No. 50-3225 (Patent Literature 3), JP-A-61-221289 (Patent Literature 4), etc.

CITATION LIST

PATENT LITERATURE

Patent Literature 1: JP-A-61-240024
Patent Literature 2: JP-A-59-107115
Patent Literature 3: Japanese Examined Patent Publication No. 50-3225
Patent Literature 4: JP-A-61-221289

SUMMARY OF INVENTION

TECHNICAL PROBLEM

In the configuration of the drying device-including coal conveyer apparatus shown in Fig. 24, the coal particles 202 which have been stored within the bucket 209 touches the exhaust gas 207. The surface side of the bed of the coal particles stored within the bucket 209 is indeed dried, but the coal particles 202 located in the inside part of the bed or the bottom part of the bed are not dried or are dried insufficiently.

On the other hand, in the drying device-including coal conveyer apparatus shown in Fig. 25, the coal particles 212 put and layered as a bed on the conveyer 214 are moved, while the exhaust gas 219 is made to flow toward the conveyer 214 from below to above so as to dry the coal particles 212. Accordingly, also in this coal conveyer apparatus, the surface side of the bed of the coal particles located on the conveyer 214 is indeed dried, but the coal particles 212 located in the inside part of the bed or the bottom part of the bed are not dried or are dried insufficiently.

Further, in the drying device-including coal conveyer apparatuses shown in Fig. 24 and Fig. 25, the exhaust gas is brought into contact with the coal particles so as to dry the coal particles. However, the moisture content of the exhaust gas is high by nature so that the exhaust gas is not suitable for drying the coal particles.

In order to accelerate drying the coal particles in these drying device-including coal conveyer apparatuses, for example, it may be considered that the conveyance speed of the conveyer is made slower or the length of the conveyer is made longer. Therefore, there arise the following problems. For example, the drying time is long to deteriorate the efficiency or the installation space for the conveyer must be increased.

In addition, in the drying device-including coal conveyer apparatus shown in Fig. 25, the coal particles 212 cannot be measured when they are being dried. Therefore, a measuring device is required separately from the coal conveyer apparatus. There arises another problem in terms of the cost and the installation space.

To solve such demerits inherent in the background art, an object of the invention is to provide a drying conveyer apparatus capable of efficiently and uniformly drying coarse particles, and a thermal electric power generation system provided with the drying conveyer apparatus.

SOLUTION TO PROBLEM

In order to attain the foregoing object, the invention is aimed at a drying conveyer apparatus including:

a pair of driving shaft bodies such as a driving pulley and a driven pulley, which are disposed at a predetermined distance from each other; and
a large number of conveyance members such as aprons which are provided between the driving shaft bodies and which are rotated around the driving shaft bodies so as to store and convey an object to be conveyed such as coal.

According to a first configuration of the invention,
the conveyance members are fluidized bed forming conveyance members such as aprons each provided with a gas jet portion such as a hot air blowing-out hole in a bottom part thereof, the gas jet portion jetting drying gas such as hot air (heated air);
a wind box is provided for supplying the drying gas from below the fluidized bed forming conveyance members which are moving; and
when each of the fluidized bed forming conveyance members passes over the wind box, the drying gas is jetted from the gas jet portion into the fluidized bed forming conveyance member so as to dry the object while forming a fluidized bed of the object.
According to a second configuration of the invention, there is provided a drying conveyer apparatus in the first configuration, wherein:

a flow rate or a temperature of the drying gas supplied to the wind box can be adjusted in accordance with a dried state of the object.

According to a third configuration of the invention, there is provided a drying conveyer apparatus in the first configuration, wherein:

the wind box includes a plurality of wind boxes provided in a conveyance direction of the object, and a flow rate or a temperature of the dying gas supplied to an upstream one of the wind boxes disposed upstream in the conveyance direction of the object is different from a flow rate or a temperature of the drying gas supplied to a downstream one of the wind boxes disposed downstream in the conveyance direction of the object.

According to a fourth configuration of the invention, there is provided a drying conveyer apparatus in the first configuration, further including:

a housing which receives a body of the drying conveyer apparatus so as to isolate the body of the drying conveyer apparatus from outside air and which has a discharge port for taking out the dried object; wherein
each of the fluidized bed forming conveyance members includes a bottom plate provided with the gas jet portion, and a back plate provided erectly from a downstream end part of the bottom plate in a moving direction of the fluidized bed forming conveyance member so that an upstream side of the fluidized bed forming conveyance member in the moving direction thereof and an upper side of the fluidized bed forming conveyance member are opened;
blow-through prevention members are placed within the housing so that the blow-through prevention members extend from one of the driving shaft bodies to the other of the driving shaft bodies correspondingly to left and right side faces of the fluidized bed forming conveyance members; and
the upstream side of each of the fluidized bed forming conveyance members in the moving direction thereof is closed with the back plate of the adjacent and previous one of the fluidized bed forming conveyance members and the left and right side faces of the fluidized bed forming conveyance members are covered with the blow-through prevention members, so that a space which can receive pulverized pieces of the object can be formed on the inside of the fluidized bed forming conveyance member.

According to a fifth configuration of the invention, there is provided a drying conveyer apparatus in the first configuration, wherein:

a bottom plate of the wind box is inclined to be lower in level from one end part thereof toward the other end part thereof, and a falling particle discharge port through which particles of the object falling down from the fluidized bed forming conveyance members are discharged from the wind box is formed in the lower end part of the bottom plate or a lower end part of the side plate connected to the lower end part of the bottom plate.

According to a sixth configuration of the invention, there is provided a drying conveyer apparatus in the first configuration, wherein:

a to-be-conveyed object supply unit which inputs the object into the fluidized bed forming conveyance members is provided above one of the paired driving shaft bodies;
the to-be-conveyed object supply unit includes:

a pre-drying hopper which stores the object;
a first gate valve which is provided in a lower part of the pre-drying hopper;
a measuring tube portion which is provided in a lower part of the first gate valve; and
a second gate valve which is provided in a lower part of the measuring tube portion;
a position sensor which detects arrival of each of the fluidized bed forming conveyance members is provided under the to-be-conveyed object supply unit;
the second gate valve is closed, the first gate valve is opened, and a part of the object stored in the pre-drying hopper is loaded in the measuring tube portion so as to be measured; and
when the arrival of each of the fluidized bed forming conveyance members is detected by the position sensor in a state where the first gate valve and the second gate valve are closed, the second gate valve is opened so that the object loaded in the measuring tube portion can be inputted into the fluidized bed forming conveyance member.

According to a seventh configuration of the invention, there is provided a drying conveyer apparatus in the first configuration, further including:

a housing which receives a body of the drying conveyer apparatus so as to isolate the body of the drying conveyer apparatus from outside air and which has a discharge port for taking out the dried object; and
a scattering particle capturing unit such as a cyclone separator which captures scattering particles of pulverized pieces of the object contained in drying gas staying in the housing when the drying gas is introduced to the scattering particle capturing unit.

According to an eighth configuration of the invention, there is provided a drying conveyer apparatus in the seventh configuration, further including:

a moisture removing unit such as a steam-water separator which removes moisture from the gas which has passed through the scattering particle capturing unit and contains moisture;
a gas heating unit which heats the gas which has passed through the moisture removing unit; and
a circulating tube arrangement which extends from the scattering particle capturing unit and is connected to the wind box through the moisture removing unit and the gas heating unit, and by which the gas heated by the gas heating unit can be supplied as the drying gas to the wind box.

According to a ninth configuration of the invention, there is provided a drying conveyer apparatus in the seventh configuration, wherein:

the particles captured by the scattering particle capturing unit are stored in a post-drying hopper together with the dried object taken out from the discharge port of the housing.

According to a tenth configuration of the invention, there is provided a drying conveyer apparatus in the ninth configuration, wherein:

a heat transfer tube for keeping a moisture content of the stored object within a predetermined range is disposed in the post-drying hopper.

According to an eleventh configuration of the invention, there is provided a drying conveyer apparatus in the first configuration, wherein:

a to-be-conveyed object supply unit which inputs the object into the fluidized bed forming conveyance members is provided above one of the paired driving shaft bodies; and
a supply-side closing member which closes the gas jet portion of each of the fluidized bed forming conveyance members having moved onto the closing member is placed under the to-be-conveyed object supply unit.

According to a twelfth configuration of the invention, there is provided a drying conveyer apparatus in the eleventh configuration, wherein:

a discharge-side closing member which closes the gas jet portion of each of the fluidized bed forming conveyance members having moved onto the discharge-side closing member is placed between the other driving shaft body of the paired driving shaft bodies and the most downstream wind box disposed most downstream in the conveyance direction of the object.

According to a thirteenth configuration of the invention, there is provided a drying conveyer apparatus in the first configuration, further including:

a housing which receives a body of the drying conveyer apparatus so as to isolate the body of the drying conveyer apparatus from outside air and which has a discharge port for taking out the dried object; and
a cleaning unit which collects the object falling down to an inside bottom of the housing and discharges the collected object from the discharge port.

According to a fourteenth configuration of the invention, there is provided a drying conveyer apparatus in the first configuration, wherein:

the object is coal, and the drying gas is the air whose temperature has been increased;
the drying conveyer apparatus further includes:

a housing which receives a body of the drying conveyer apparatus so as to isolate the body of the drying conveyer apparatus from outside air and which has a discharge port for taking out the dried object;
an oxygen concentration meter which detects oxygen concentration in the drying gas; and
an inactive state forming unit which makes at least the interior of the housing inactive; and
the interior of the housing is made inactive by the inactive state forming unit when the oxygen concentration detected by the oxygen concentration meter exceeds a specified value.

According to a fifteenth configuration of the invention, there is provided a drying conveyer apparatus in the first configuration, wherein:

the object is coal, and the drying gas is the air whose temperature has been increased;
the drying conveyer apparatus further includes:

a housing which receives a body of the drying conveyer apparatus so as to isolate the body of the drying conveyer apparatus from outside air and which has a discharge port for taking out the dried object;
a carbon monoxide concentration meter which detects carbon monoxide concentration in the drying gas; and
an inactive state forming unit which makes at least the interior of the housing inactive; and
the interior of the housing is made inactive by the inactive state forming unit when the carbon monoxide concentration detected by the carbon monoxide concentration meter exceeds a specified value.

According to a sixteenth configuration of the invention, there is provided a drying conveyer apparatus in the first configuration, wherein:

the object is coal, and the drying gas is the air whose temperature has been increased;
the drying conveyer apparatus further includes:

a housing which receives a body of the drying conveyer apparatus so as to isolate the body of the drying conveyer apparatus from outside air and which has a discharge port for taking out the dried object;
a thermometer which detects a temperature of the drying gas; and
an inactive state forming unit which makes at least the interior of the housing inactive; and
the interior of the housing is made inactive by the inactive state forming unit when the temperature detected by the thermometer exceeds a specified value.

According to a seventeenth configuration of the invention, there is provided a drying conveyer apparatus in any one of the fourteenth through sixteenth configurations, further including:

a scattering particle capturing unit which captures scattering particles of pulverized pieces of the object contained in drying gas staying in the housing when the drying gas is introduced to the scatter particle capturing unit; and a post-drying hopper which stores the dried pulverized pieces discharged from the housing and the fine particles of the pulverized pieces captured by the scattering particle capturing unit; wherein:

the scattering particle capturing unit and the interior of the post-drying hopper are made inactive by the inactive state forming unit when a value detected by the oxygen concentration meter, the carbon monoxide concentration meter or the thermometer exceeds the specified value.

According to an eighteenth configuration of the invention, there is provided a drying conveyer apparatus in the first configuration, wherein:

the object is coal;
a to-be-conveyed object supply unit which inputs the object into the fluidized bed forming conveyance members is provided above one of the paired driving shaft bodies;
the to-be-conveyed object supply unit has a pulverizer which pulverizes the object and a pre-drying hopper which stores pulverized pieces of the object;
the drying conveyer apparatus further includes:

a carbon monoxide concentration meter which detects carbon monoxide concentration in the pre-drying hopper; and
an inactive state forming unit which makes the interior of the pre-drying hopper inactive; and
the interior of the pre-drying hopper is made inactive by the inactive state forming unit when the carbon monoxide concentration detected by the carbon monoxide concentration meter exceeds a specified value.

According to a nineteenth configuration of the invention, there is provided a drying conveyer apparatus in the first configuration, further including:

a pulverizer which pulverizes a raw material of the object so as to set the pulverized raw material as the object; wherein:
the pulverizer includes:

a rotor in which a jet port is formed in a circumferential wall thereof; and
a collision receiver member such as a pulverizer casing which is placed to surround the rotor; and
the raw material supplied into the rotor which is rotating is jetted from the jet port by centrifugal force so that the raw material colliding with the collision receiver member can be pulverized.

According to a twentieth configuration of the invention, there is provided a drying conveyer apparatus in the first configuration, wherein:

the wind box includes a first wind box, a second wind box and a third wind box which are disposed sequentially from the upstream side to the downstream side in a conveyance direction of the object;
hot air supply tubes each provided with a blower and a heat exchanger are connected to the wind boxes respectively;
a first independent hood, a second independent hood and a third independent hood are disposed above the first wind box, the second wind box and the third wind box so as to be opposed to the first wind box, the second wind box and the third wind box through the fluidized bed forming conveyance members circulated among the first wind box, the second wind box and the third wind box;
exhaust tubes are connected to the independent hoods respectively;
a front end of the exhaust tube connected to the first independent hood is connected to a suction port of the blower provided in the second wind box; and
a front end of the exhaust tube connected to the second independent hood is connected to a suction port of the blower provided in the third wind box.

According to a twenty-first configuration of the invention, there is provided a drying conveyer apparatus in the twentieth configuration, wherein:

soft plate materials are hung between adjacent ones of the independent hoods so as to face the fluidized bed forming conveyance members which are moving.

According to a twenty-second configuration of the invention, there is provided a drying conveyer apparatus in the twentieth configuration, wherein:

the size of the wind box disposed downstream in the conveyance direction of the object is larger than the size of the wind box disposed upstream in the conveyance direction of the object.

According to a twenty-third configuration of the invention, there is provided a drying conveyer apparatus in any one of the first through twenty-second configurations, wherein:

the object is brown coal.

According to a twenty-fourth configuration of the invention, there is provided a thermal electric power generation plant, including:

a conveyer apparatus which conveys coal;
a coal fired boiler apparatus which burns the coal conveyed by the conveyer apparatus so as to generate steam; and
a stream turbine which is rotationally driven by the steam from the coal fired boiler apparatus; wherein:

the conveyer apparatus is a drying conveyer apparatus according to any one of the first through twenty-second configurations; and
the air whose temperature is increased by the steam extracted from the steam turbine is used as the drying gas for the drying conveyer apparatus.

According to a twenty-fifth configuration of the invention, there is provided a thermal electric power generation plant, including:

a conveyer apparatus which conveys coal;
a coal fired boiler apparatus which burns the coal conveyed by the conveyer apparatus so as to generate steam; and
a stream turbine which is rotationally driven by the steam from the coal fired boiler apparatus; wherein:

the conveyer apparatus is a drying conveyer apparatus according to any one of the first through twenty-second configurations; and
the air whose temperature is increased by exhaust gas discharged from the coal fired boiler apparatus is used as the drying gas for the drying conveyer apparatus.

According to a twenty-sixth configuration of the invention, there is provided a thermal electric power generation plant in the twenty-fourth or twenty-fifth configuration, wherein: the coal fired boiler apparatus is a two-pass type boiler apparatus in which a convection heat transfer portion (convection path) is disposed in a rear part of a furnace so that combustion gas moving up in the furnace can flow to move down in the convection heat transfer portion (convection path).

According to a twenty-seventh configuration of the invention, there is provided a thermal electric power generation plant in any one of the twenty-fourth through twenty-sixth configurations, wherein: the coal is brown coal.

ADVANTAGEOUS EFFECTS OF INVENTION

According to the invention configured as described above, it is possible to provide a drying conveyer apparatus capable of efficiently and uniformly drying coarse particles, and a thermal electric power generation plant provided with the drying conveyer apparatus.

BRIEF DESCRIPTION OF DRAWINGS

[Fig. 1] An overall system diagram of a drying conveyer apparatus according to a first embodiment of the invention.
[Fig. 2] A schematic configuration diagram of a body of the drying conveyer apparatus according to the embodiment.
[Fig. 3] A perspective view of aprons for use in the body of the drying conveyer apparatus.
[Fig. 4] An enlarged sectional view taken on line A-A in Fig. 2.
[Fig. 5] An enlarged sectional view taken on line B-B in Fig. 2.
[Fig. 6] A schematic side view showing an arrangement state of the aprons.

[Fig. 7] A characteristic graph showing a change in the moisture content of brown coal particles when the brown coal particles had been fluidized and dried in a fluidized bed forming box.

[Fig. 8] A system diagram showing a first application example in which the drying conveyer apparatus according to the embodiment of the invention is applied to a thermal electric power generation system.

[Fig. 9] A main portion enlarged system diagram for explaining a control system of hot air in the thermal electric power generation system shown in Fig. 8.

[Fig. 10] A system diagram showing a second application example in which the drying conveyer apparatus according to the embodiment of the invention is applied to a thermal electric power generation system.

[Fig. 11] A main portion enlarged system diagram for explaining a control system of hot air in the thermal electric power generation system shown in Fig. 10.

[Fig. 12] A schematic plan view of a pulverizer of a rotary centrifugal pulverizer system which is used in the invention.

[Fig. 13] A side view of the pulverizer.

[Fig. 14] A partially cutaway perspective view of the pulverizer.

[Fig. 15] A front view showing a schematic configuration of a pulverizer of a hammer crusher system which is used as a comparative example with the invention.

[Fig. 16] A graph showing ratios of moisture contents of raw coal, pulverized coal and dried coal in Experimental Example 1 and Comparative Example 1 by comparison.

[Fig. 17] A graph showing necessary energies in drying conveyer apparatuses according to Experimental Example 1 and Comparative Example 1 by comparison.

[Fig. 18] A schematic configuration diagram of a drying conveyer apparatus according to a second embodiment of the invention.

[Fig. 19] A perspective view near a body of the drying conveyer apparatus.

[Fig. 20] A moist air diagram in the drying conveyer apparatus.

[Fig. 21] A graph showing specific characteristics between the drying conveyer apparatus and a drying apparatus according to Comparative Example 2.

[Fig. 22] A graph showing exhaust gas temperature, air flow rate and thermal efficiency based on difference in number of divisions of wind boxes (independent hoods).

[Fig. 23] A schematic configuration diagram of a drying conveyer apparatus according to a third embodiment of the invention.

[Fig. 24] A perspective view of a proposed drying device-including coal conveyer apparatus.

[Fig. 25] A schematic configuration diagram of another drying device-including coal conveyer apparatus proposed in the background art.

DESCRIPTION OF EMBODIMENTS

Next, embodiments of the invention will be described with reference to the drawings. First, the configuration of a drying conveyer apparatus will be described.

(Configuration of First Drying Conveyer Apparatus)

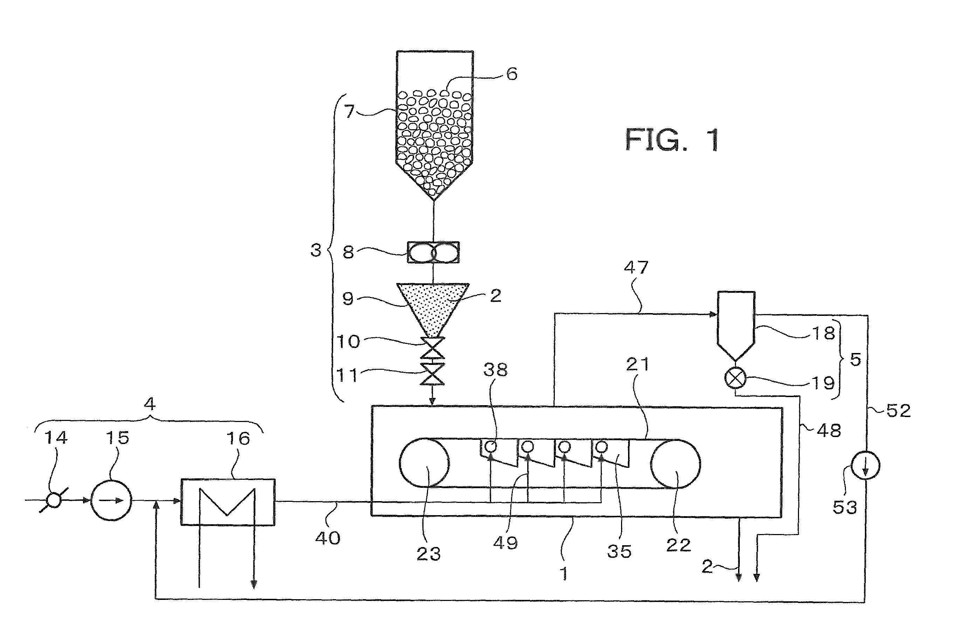

Fig. 1 is an overall system diagram of a drying conveyer apparatus according to an embodiment of the invention.

As shown in Fig. 1, the drying conveyer apparatus is mainly constituted by a drying conveyer apparatus body 1, a coarse particle supply unit 3 for supplying undried coarse particles 2 such as coal (brown coal) to the drying conveyer apparatus body 1, a hot air supply unit 4 for supplying drying hot air to the drying conveyer apparatus body 1, and a scattering particle capturing unit 5 for capturing scattering dried fine particles.

The configuration of the drying conveyer apparatus body 1 and so on will be described later.

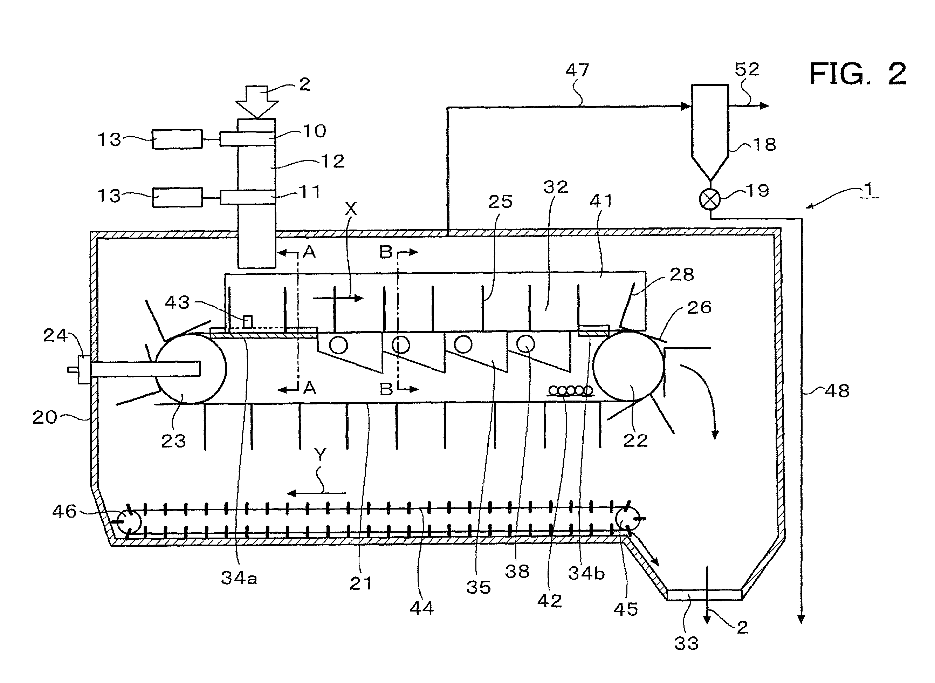

The coarse particle supply unit 3 has a raw material silo 7 for storing a raw material 6 which has not been pulverized into the coarse particles 2, a pulverizer 8 provided under the raw material silo 7 and for pulverizing the raw material 6 into a predetermined size, a pre-drying hopper 9 for storing the coarse particles 2 pulverized and produced thus, a first gate valve 10 provided under the pre-drying hopper 9, a second gate valve 11 provided under the first gate valve 10, and a measuring tube portion 12 (see Fig. 2) provided between the first gate valve 10 and the second gate valve 11.

As shown in Fig. 2, the first gate valve 10 and the second gate valve 11 can be driven individually and independently of each other by cylinders 13. In addition, a lower end part of the measuring tube portion 12 is inserted into the drying conveyer apparatus body 1 (a housing 20 which will be described later) (see Fig. 2).

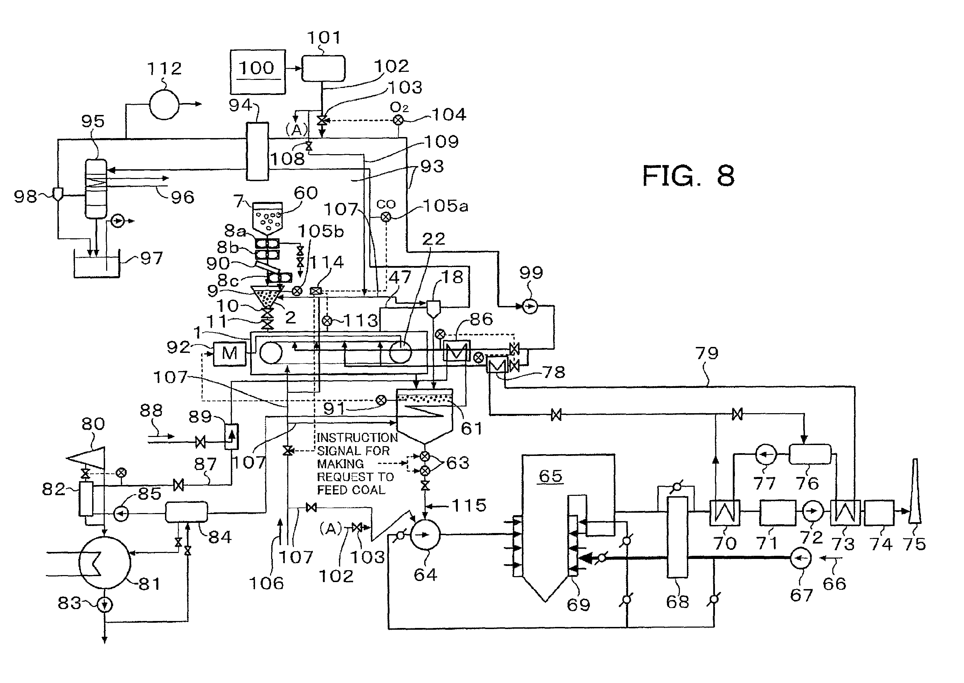

The hot air supply unit 4 has a suction damper 14, a blower 15 and a heat exchanger 16. The air supplied to the heat exchanger 16 is heated, for example, by steam or the like extracted from a steam turbine 80 (see Fig. 8).

The scattering particle capturing unit 5 has a cyclone separator 18 and a rotary seal 19 provided under the cyclone separator 18.

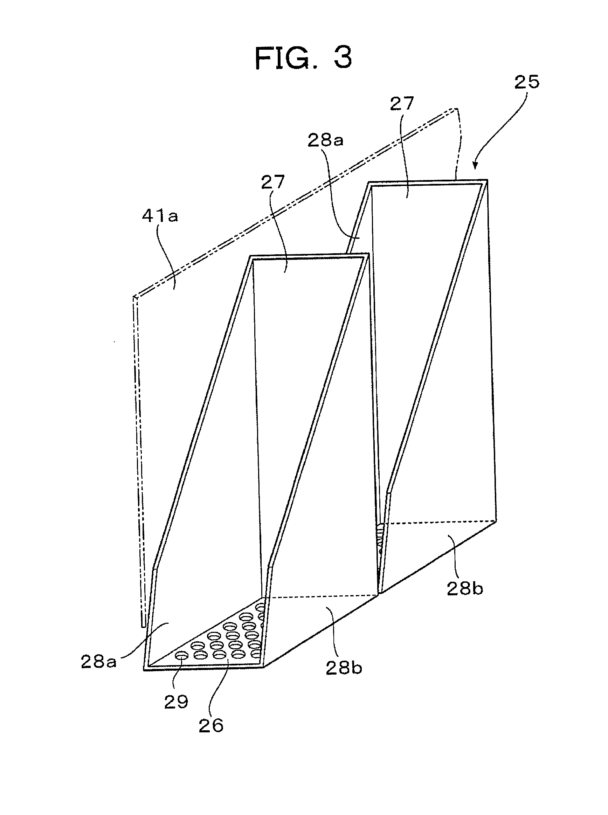

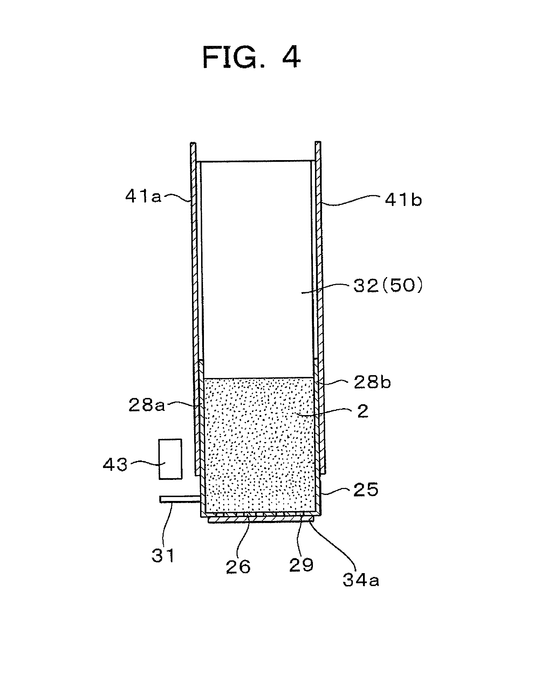

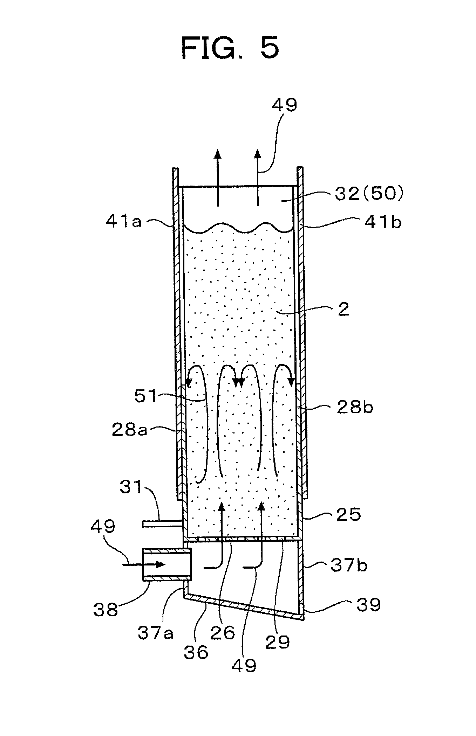

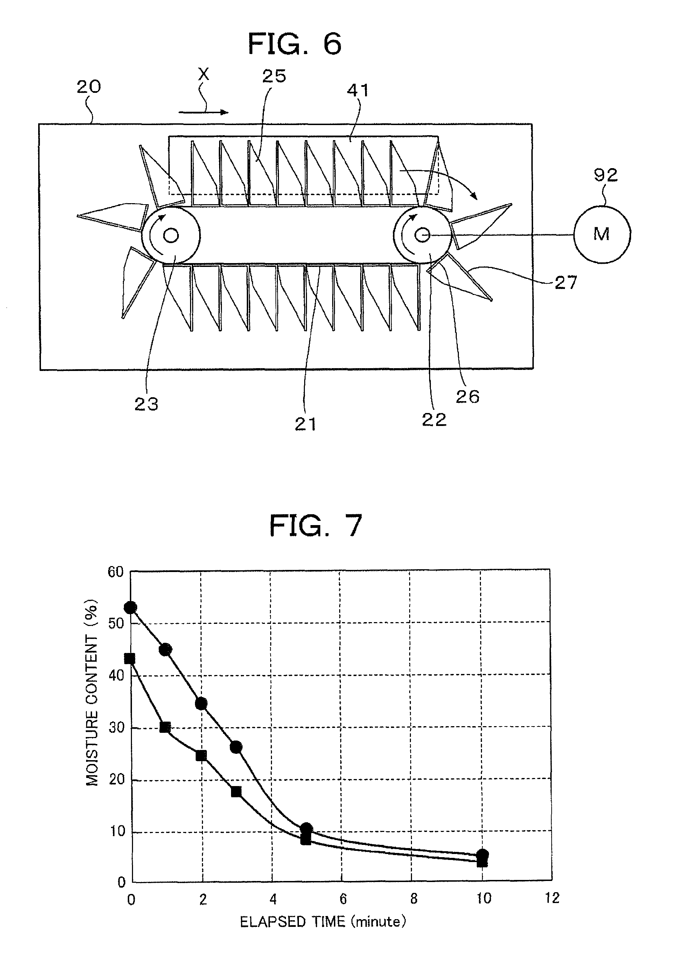

Fig. 2 is a schematic configuration diagram of the drying conveyer apparatus body 1. Fig. 3 is a perspective view of aprons for use in the drying conveyer apparatus body 1. Fig. 4 is an enlarged sectional view taken on line A-A in Fig. 2. Fig. 5 is an enlarged sectional view taken on line B-B in Fig. 2. Fig. 6 is a schematic side view showing an arrangement state of the aprons.

In the drying conveyer apparatus body 1, an apron conveyer 21 is disposed in a substantially heightwise intermediate position on the inner side of the housing 20 extending in the conveyance direction of the coarse particles 2. The housing 20 receiving the apron conveyer 21 is isolated from the outside air. The apron conveyer 21 is tensioned between a driving pulley 22 and a tension pulley (driven pulley) 23 disposed at a predetermined distance from each other. The tension of the apron conveyer 21 can be set by a tension setter 24 attached to the tension pulley 23 so that extension or meandering of the apron conveyer 21 can be adjusted.

The apron conveyer 21 consists of a chain conveyer, on which a large number of aprons 25 are arrayed and mounted rotatably. As shown in Fig. 3, each apron 25 has a bottom plate 26, a back plate 27 and reinforcement plates 28a and 28b. The back plate 27 is provided erectly from a downstream end part of the bottom plate 26 in the moving direction of the apron 25. The reinforcement plates 28a and 28b are provided for reinforcement to couple the bottom plate 26 and the back plate 27 from their opposite side faces respectively. Each reinforcement plate 28a, 28b has a side face substantially shaped like a triangle.

Each apron 25 is opened on the upstream side in the moving direction, on a major part of left and right side faces, and on the upper side. As shown in Fig. 3 to Fig. 6, the upstream side of the apron 25 in the moving direction is closed by the back plate 27 of an adjacent and previous apron 25. The left and right side faces of the apron 25 are covered with plate-like blow-through prevention members 41a and 41b provided within the housing 20 correspondingly to the left and right side faces. Each blow-through prevention member 41 extends to be almost as long as the distance between the driving pulley 22 and the tension pulley 23 as shown in Fig. 2 or Fig. 6. Incidentally, the illustration of the blow-through prevention member 41b on the nearer side is omitted in Fig. 3 in order to make the drawing complicate.

A reception space 32 for receiving the coarse particles 2 is formed inside each apron 25 by the bottom plate 26, the back plate 27 provided erectly from the bottom plate 26, the back plate 27 of the adjacent and previous apron 25, and the blow-through prevention members 41a and 41b (see Fig. 4). As shown in Fig. 4 and Fig. 5, the upper end parts of the blow-through prevention members 41a and 41b are opened.

A large number of hot air blowing-out holes 29 are formed in the bottom plate 26. Although a punching plate in which a large number of hot air blowing-out holes 29 are formed is used as the bottom plate 26 in the embodiment, a wire netting or the like may be used. Further, as shown in Fig. 4, near the lower end part of the left reinforcement plate 28a of each apron 25, a plate-like detected portion 31 is provided so that arrival of the apron 25 can be detected. On the other hand, a position sensor 43 for detecting the arrival of the apron 25 under the measuring tube portion 12 is fixed to the vicinity of the apron 25 (detected portion 31).

In the case of the embodiment, the tension pulley 23 is disposed on the supply side of the coarse particles 2, and the driving pulley 22 is disposed on the discharge side of the coarse particles 2. The coarse particles 2 are conveyed from the tension pulley 23 toward the driving pulley 22 intermittently. The arrow X (see Fig. 2) designates the conveyance direction of the coarse particles 2.

To that end, as shown in Fig. 2, the lower end part of the measuring tube portion 12 of the coarse particle supply unit 3 penetrates a part of the housing above the tension pulley 23 and extends to the vicinity of the apron 25. On the other hand, a discharge port 33 for discharging the dried coarse particles 2 is formed in a part of the housing below the driving pulley 22.

When the coarse particles 2 falling down from the lower end part of the measuring tube portion 12 are received in the reception space 32 of each apron 25 as will be described later, a part of the coarse particles 2 may fall down into the apron conveyer 21 through the hot air blowing-out holes 29 of the apron 25. In order to prevent this, a supply-side closing plate 34a for closing the hot air blowing-out holes 29 of the apron 25 arriving under the measuring tube portion 12 is placed under the apron 25 as shown in Fig. 2 and Fig. 4. In addition, a discharge-side closing plate 34b for preventing the coarse particles 2 from falling down from the hot air blowing-out holes 29 is also placed near the driving pulley 22.

As shown in Fig. 2, between the supply-side closing plate 34a and the discharge-side closing plate 34b, a plurality of wind boxes 35 are placed under the aprons 25 continuously in the conveyance direction X of the coarse particles 2. As shown in Fig. 5, each wind box 35 has a bottom plate 36 which is inclined to be lower on one end side, opposite side plates 37a and 37b which are provided erectly from the bottom plate 36, and a hot air introduction tube 38 which is attached to the shorter side plate 37a. An upper opening part of the wind box 35 is opposed to the bottom plate 26 of the apron 25.

A falling particle discharge hole 39 is provided near the lower end part of the longer side plate 37b on the opposite side of the shorter side plate 37a having the hot air introduction tube 38 or provided in the lower end part of the bottom plate 36. In addition, as shown in Fig. 1, hot air supply tubes 40 extending from the hot air supply unit 4 are connected to the hot air introduction tubes 38 of the wind boxes 35 respectively.

Further, on the inner bottom of the housing 20, a cleaning chain conveyer 44 is disposed along the longitudinal direction of the housing 20. The cleaning chain conveyer 44 is rotationally driven in the arrow Y direction at all times or at predetermined temporal intervals by a driving pulley 45 and a driven pulley 46 so as to clean up the inner bottom of the housing 20.

In the embodiment, the inner bottom of the housing 20 is made horizontal. However, when the inner bottom of the housing 20 is provided with a slight inclination to be lower on the discharge port 33 side, the efficiency in cleaning with the cleaning chain conveyer 44 can be excellent.

As shown in Fig. 2, a fine particle capturing tube arrangement 47 extending toward the cyclone separator 18 is connected to an upper face of the housing 20. On the other hand, a fine particle feeding tube arrangement 48 extending from the rotary seal 19 extends from the outside of the housing 20 toward the discharge port 33.

In addition, as shown in Fig. 1, the air separated from coal fine particles by the cyclone separator 18 is sent back to the upstream side of the heat exchanger 16 by an air return tube 52 and a blower 53.

Next, operation of the drying conveyer apparatus will be described.

(Operation of Drying Conveyer Apparatus)

As shown in Fig. 1, the raw material 6 consisting of, for example, brown coal having a moisture content of about 40 to 50 wt% and stored in the raw material silo 7 is pulverized by the pulverizer 8 into particles with an average particle size of about 2 mm, which chiefly contain the coarse particles 2 having a particle size of 1 to 10 mm. The particles are then stored in the pre-drying hopper 9.

The particle size distribution of the aforementioned particles fluctuates in accordance with various conditions including the properties of the raw material coal and the degree of pulverization. Fine particles having a particle size of 150 $\mu$m or smaller may be contained.

When the upper first gate valve 10 is opened in the state where the lower second gate valve 11 is closed, a part of the coarse particles 2 within the pre-drying hopper 9 are charged into the measuring tube portion 12 (see Fig. 2) through the first gate valve 10 so that the coarse particles 2 corresponding to the volume of the measuring tube portion 12 can be measured. After the measuring tube portion 12 is filled with the coarse particles 2, the first gate valve 10 is closed. The open/close operations of the gate valves 10 and 11 are performed by the cylinders 13 (see Fig. 2) attached thereto individually.

The apron conveyer 21 moves and circulates in the conveyance direction X intermittently or continuously as shown in Fig. 2. The arrival of each apron 25 under the measuring tube portion 12 is detected by the cooperation of the detected portion 31 attached to the apron 25 and the position sensor 43 as shown in Fig. 4. When the apron 25 arrives under the measuring tube portion 12, all the hot air blowing-out holes 29 of the apron 25 are closed with the supply-side closing plate 34 as shown in Fig. 4.

When the second gate valve 11 is opened in this state, the coarse particles 2 stored within the measuring tube portion 12 fall down into the reception space 32 of the apron 25. After the coarse particles 2 fall down, the second gate valve 11 is closed automatically to be ready for the next measurement. Since the hot air blowing-out holes 29 of the apron 25 are closed by the closing plate 34 as described previously, there is no fear that the inputted coarse particles 2 may fall down from the hot air blowing-out holes 29, but the measurement amount is kept proper.

Fig. 4 shows the state where the coarse particles 2 measured and cut out thus are received within the apron 25. Since hot air 49 which will be described later is not blown into the apron 25 at this time, a bed formed out of the coarse particles 2 is a static bed, and a sufficient space portion 50 still remains in an upper part of the reception space 32.

As shown in Fig. 1 and Fig. 5, the hot air 49 generated and supplied by the hot air supply unit 4 (see Fig. 1) is blown into each wind box 35 (see Fig. 5). On the other hand, when the hot air blowing-out holes 29 formed in the bottom plate 26 of the apron 25 pass the closing plate 34 with movement of the apron 25, the hot air blowing-out holes 29 are opened in the wind box 35 so that the hot air 49 introduced into the wind box 35 can be blown in from the bottom part of the apron 25. Thus, fluidization 51 begins to occur in the coarse particles 2.

Only one-side faces of the coarse particles 2 can be dried if the hot air 49 passes among the coarse particles 2 simply. In the embodiment, however, the coarse particles 2 are made to float so that the fluidization 51 can occur nondirectionally and irregularly. Thus, all the faces of the coarse particles 2 can be dried uniformly and quickly.

The blow-through prevention members 41a and 41b are provided to prevent the coarse particles 2 which are fluidized and blown up from being blown out from the apron 25

The specific gravity of the coarse particles 2 decreases gradually to be lighter in the drying process. Therefore, as shown in Fig. 2, the wind boxes 35 are divided into a plurality of pieces along the conveyance direction X of the coarse particles 2 so that the air flow of the hot air 49 can be adjusted in accordance with the specific gravity of the coarse particles 2. Without the adjustment of the hot air 49, a part of the coarse particles 2 blown out from the wind boxes 35 may fall down during the drying process undesirably or danger of natural ignition may occur undesirably. How to adjust the air flow of the hot air 49 in accordance with the dried state of the coarse particles 2 will be described later.

The coarse particles 2 having passed over the wind boxes 35 are dried to have a desired moisture content (about 5 to 10 wt% in the case of brown coal in the embodiment). When the apron 25 turns from the upper side to the lower side around the driving pulley 22 as shown in Fig. 2, the coarse particles 2 are inclined automatically and finally revered. Thus, the dried coarse particles 2 fall down toward the discharge port 33 and are taken out from the housing 20.

As shown in Fig. 2, a plurality of air jet nozzles 42 for forcibly blowing away the coarse particles 2 which may remain in the aprons 25 are provided obliquely under the driving pulley 22. The reversed apron 25 passes under the air jet nozzles 42 so that the coarse particles 2 adhering to the interior of the apron 25 can be blown away by the air jetted at a high speed from the air jet nozzles 42 through the hot air blowing-out holes 29 formed in the bottom plate 26 of the apron 25. The air jetted at a high speed also serves for cleaning the hot air blowing-out holes 29 and the interior of the apron 25. Thus, the coarse particles 2 can be always kept in a properly fluidized state within the apron 25.

The coarse particles 2 falling down to the bottom of the housing 20 in this manner or the coarse particles 2 falling down to the bottom of the housing 20 via the falling particle discharge holes 39 of the wind boxes 35 are swept out toward the discharge port 33 by the cleaning chain conveyer 44. The coarse particles 2 falling down to the bottom of the housing 20 through the falling particle discharge holes 39 of the wind boxes 35 are also dried due to sufficient contact with the hot air 49. The coarse particles 2 may be discharged from the discharge port 33 together with other dried coarse particles 2.

On the other hand, fine particles flying up due to the hot air 49 pass through the fine particle capturing tube arrangement 47, and the fine particles are captured by the cyclone separator 18, pass through the rotary seal 19 and are sent toward the discharge port 33 of the housing 20 by the fine particle feeding tube arrangement 48. The time required for drying the fine particles flying up due to the hot air 49 is shorter than the time required for drying the coarse particles 2. The fine particles are completely dried when they are conveyed to the cyclone separator 18. Therefore, there may be no problem if the fine particles are discharged directly from the fine particle feeding tube arrangement 48 and mixed with other dried coarse particles 2.

As shown in Fig. 2, it is structurally difficult to make the final wind box 35 (the wind box 35 at the right end in Fig. 2) adjacent to the driving pulley 22. Therefore, a gap is inevitably formed between the final wind box 35 and the driving pulley 22. Therefore, in the embodiment, the discharge-side closing plate 34b is placed between the final wind box 35 and the driving pulley 22 so as to close the hot air blowing-out holes 29 of each apron 25 passing therebetween. Thus, the dried coarse particles 2 are prevented from falling down to the vicinity of the driving pulley 22.

Fig. 7 is a characteristic graph showing a change in the moisture content of brown coal particles in the case where the brown coal particles had been fluidized and dried in a fluidized bed forming box in which a large number of hot air blowing-out holes were formed in a bottom plate and which was open on the upper side.

Black solid circles in Fig. 7 show the case where Rhenish coal (made in Germany) whose moisture content is 53 wt% before drying and whose average particle size is 2 mm is used. Black solid squares in Fig. 7 show the case where Baturona coal (made in Sumatra, Indonesia) whose moisture content is 43 wt% before drying and whose average particle size is 2 mm is used. In both the cases, experiments were performed in the conditions that the brown coal bed was set to be 50 mm thick in each box to which hot air had not been supplied yet, the temperature of the hot air was set at 115°C, and the flow rate of the hot air was set at 50 L/min.

As shown in Fig. 7, the moisture content varied largely depending on the production area of the brown coal. However, when the brown coal particles within the box were fluidized and dried while the aforementioned hot air was blown into the box through the aforementioned hot air blowing-out holes, the moisture content of the brown coal particles decreased suddenly to 10 wt% or less five minutes after the commencement of drying and decreased to 5 wt% 10 minutes after the commencement of drying in either case. It may be considered that this was effected by drying based on fluidization of the brown coal particles.

Incidentally, from other experiments by the present inventors, it has been proved that it is preferable that the temperature of the hot air (dried air) is in a range of about 110 to 160°C and the flow rate of the hot air is in a range of about 40 to 100 L/min.

As an index concerned with the fluidization state of particles (fluid media), there is a cross-sectional average flow velocity within a column which is not filled with the media, that is, a superficial velocity indicated as a value obtained by dividing the volume flow rate of the air passing through the column by the sectional area of the column.

Under the condition that the superficial velocity is lower than an initial fluidization velocity (Umf), the air merely flows through gaps among the media, and the media are stationary.

Generally the superficial velocity is often set at 0.8 to 1.2 m/s in order to stably form a fluidized bed with a small pressure loss.

On the other hand, from the point of view of drying in the fluidized bed, the drying can be made in a shorter time as the superficial velocity is increased, so that the apparatus can be made more compact.

When the superficial velocity is made higher than a floating velocity (Ut, which will be also referred to as terminal velocity) depending on the particle size and mass of particles, the particles come to a floating state and begin to scatter. In accordance with this, the pressure loss in the fluidized bed also increases. Before that stage, the media may come into a so-called slugging state in which the whole of the media repeats rising, falling and breaking down as a mass, with the result that the media are uneven due to fluctuation of pressure.

The drying conveyer apparatus according to the embodiment of the invention uses coal roughly pulverized into particles whose average particle size is 2 mm and whose maximum particle size is about 10 mm or less, as particle size on which drying can be performed efficiently.

It was, however, experimentally confirmed that a stagnation region in which particles are not fluidized may appear locally within the apron 25 as a conveyance member when the superficial velocity in the fluidized bed is in the aforementioned typical range of 0.8 to 1.2 m/s.

Specifically, the stagnation region appeared near a corner part in which the bottom plate 26, the back plate 27 and the reinforcement plates 28a and 28b were connected in the apron 25 when particles had a high moisture content immediately after the particles were roughly pulverized and supplied onto the conveyer.

Incidentally, the conveyance member is not limited to the apron 25 but the same rule can be applied to the case where the conveyance member has another shape such as a bucket-like shape.

When coal with plenty of volatile components, such as brown coal, in the stagnation region is used, a so-called charcoal ignition may occur, that is, the coal accumulating heat of the drying air may ignite spontaneously. Therefore, operation is carried out with a superficial velocity high enough to prevent the stagnation region from appearing during the fluidization of the particles within the apron 25.

Specifically, when the superficial velocity within the reception space 32 is set at 1.2 to 3.0 m/s or preferably at 1.8 to 2.5 m/s, the stagnation region can be prevented from appearing. Thus, increase in pressure loss can be also suppressed to the minimum.

When the superficial velocity is made higher than that in a typical fluidized bed in this manner, the dried brown coal particles within the reception space 2 can be classified aggressively to accelerate drying.

As described previously, the particles pulverized roughly include fine particles whose particle size is not larger than 150 $\mu$m. When a specified kind of coal is roughly pulverized into the aforementioned particles whose average particle size is 2 mm and whose maximum particle size is about 10 mm or less, the fine particles account for about 2 wt% of the total.

Within the fluidized bed, the particles collide with one another repeatedly in the course where the particles come in contact with the drying air to undergo drying. Thus, the particles break down so that the particle size becomes smaller and smaller. Due to the advance of reduction in particle size, the ratio of fine particles whose particle size is not larger than 150 $\mu$m reaches about 20 wt% of the total of dried coal (whose moisture content is, for example, 10 wt% or less) finally discharged from the drying conveyer apparatus.

Here, particles whose terminal velocity is higher than the superficial velocity of the hot air are dried while fluidized within the reception space 32. When the particles become lighter because the particles are reduced in moisture content, the terminal velocity of the particles may be lower than the superficial velocity of the hot air. Those particles fly away from the reception space 32.

Particles whose particle size is small are dried more easily than particles whose particle size is large. The particles whose particle size is small reaches the condition that the terminal velocity becomes lower than the superficial velocity of the hot air, in a short time due to reduction in moisture content.

The particles flying away are not only fluidized and dried within the reception space 32 but also dried by residual heat of the hot air in the course where the particles are flying away and moving.

After the particles whose particle size is small fly away, the particles whose particle size is large stay behind in the fluidized bed. The particles staying behind are dried by relatively more hot air because the particles whose particle size is small are absent. Thus, the drying time can be shortened totally.

Fig. 8 is a system diagram showing a first application example in which the drying conveyer apparatus according to the embodiment of the invention is applied to a thermal electric power generation system.

The invention can be applied to a so-called two-pass type boiler apparatus or a tower type boiler apparatus as a boiler apparatus in a thermal electric power generation system. In the two-pass type boiler apparatus, a convection heat transfer portion (convection path) is disposed in a rear part of a furnace so that combustion gas moving up in the furnace can flow to move down in the convection path. In the tower type boiler apparatus, a convection path is disposed continuously to an upper part of a furnace so as to form an integrated structure, so that combustion gas moving up in the furnace can move further up in the convection path.

Fig. 8 shows an example in which the invention is applied to the two-pass type boiler apparatus.

In the background art, in a boiler apparatus in which coal with a high moisture content, such as brown coal, is directly burned as fuel, it is necessary to form a fire ball in the furnace to perform burning from the point of view of combustibility and ignitionability. Accordingly, there has been used a tower type boiler apparatus using a combustion system in which the furnace has a substantially square shape in horizontal section and a burner is disposed in a corner part so as to form a fire ball.

In the boiler apparatus in which coal with a high moisture content is directly burned as fuel, the amount of exhaust gas increases due to evaporation of the moisture in the coal. Thus, the volume of the furnace and the volume of the convection path become large accordingly.

In the tower type boiler apparatus, the convection path and the furnace are formed continuously and integrally. Since the both have almost the same sectional area, the sectional area of the convection path cannot be designed in accordance with the optimum flow rate of gas. Therefore, the internal volume of the boiler as a whole tends to further increase.

For these reasons, the tower type boiler apparatus in which coal with a high moisture content is directly burned as fuel has a large height, which reaches about 160 m when it is a 1,000 MW class boiler apparatus.

On the other hand, without the fireball formed in the furnace, there is no problem as to combustibility or ignitionability even in coal with a high moisture content such as brown coal when the moisture is reduced by use of the drying conveyer apparatus according to the invention. Therefore, the horizontal section of the furnace may be formed not into a substantially square shape but into a rectangular shape.

Therefore, a two-pass type boiler apparatus of a combustion system in which a plurality of stages and a plurality of rows of burners are disposed on one wall surface or two opposite wall surfaces of a furnace so as to form flames of the burners individually can be used.

In the two-pass type boiler apparatus, there is a merit that sectional thermal load can be adjusted in the width direction of the furnace. Further, since the convection path is not integrated with the furnace, the structure of the convection path can be designed to have optimum dimensions in accordance with the flow rate of combustion gas. Accordingly, there is a merit that the boiler apparatus can be made compact.

(Schematic Configuration of First Thermal Electric Power Generation System)

Dried brown coal particles 61 whose moisture content has been adjusted to desired one (10 wt% in this embodiment) by drying are stored in a post-drying hopper 62. The dried brown coal particles 61 are pneumatically conveyed to burners (not shown) of a coal fired boiler apparatus 65 through a rotary seal 63 and a fan mill 64.

The rotary seal 63 has two stages, which are opened/closed based on a coal feed instruction signal.

The fan mill 64 has a fan as a rotary impacting member (pulverizer) internally. The fan serves as a pneumatic conveyance unit in addition to the aforementioned pulverizer. The fan mill 64 is a mill suitable for pulverizing brown coal or the like. High-temperature combustion air is supplied to the fan mill 64. The brown coal particles made into finer particles by the fan mill 64 are conveyed to the boiler apparatus 65 together with the combustion air 66.

When the dried brown coal particles 61 are inputted into the fan mill 64 from the post-drying hopper 62, the high-temperature combustion air 66 in the fan mill 64 flows to the vicinity of an outlet damper of the rotary seal 63 in accordance with the inputted dried brown coal particles 61, so as to increase the temperature. This temperature rise leads to a danger that the dried brown coal particles 61 stored in the post-drying hopper 62 may ignite spontaneously. In the embodiment, therefore, cool air 115 is supplied to a tube arrangement between the post-drying hopper 62 and the fan mill 64 so as to prevent the dried brown coal particles 61 from igniting spontaneously.

On the other hand, the combustion air 66 is supplied to a wind box 69 of the boiler apparatus 65 through an air preheater 68 by a forced draft fan (FDF) 67 so as to engage in combustion of the brown coal particles 61. Exhaust gas generated by the combustion passes through the air preheater 68, a first heat exchanger 70, an electrostatic precipitator (EP) 71, an induced draft fan (IDF) 72, a second heat exchanger 73, a desulfurizer 74, etc. and is then discharged from a chimney 75 to the atmosphere.

A first hot air heat source system is constituted by the first heat exchanger 70, the second heat exchanger 73, a thermal medium tank 76 and a heating circulating pump 77 which are placed between the first heat exchanger 70 and the second heat exchanger 73, a third heat exchanger 78 which is disposed on the hot air supply unit side as will be described later, a thermal medium circulating tube arrangement 79, and a thermal medium (not shown) which circulates among these members.

On the other hand, steam which has finished its work in a low-pressure steam turbine 80 is sent to a condenser 81. A part of the steam is extracted, sent to a fourth heat exchanger 82 and sent to the condenser 81 via the fourth heat exchanger 82. The reference numeral 83 in Fig. 8 represents a condensate pump.

A second hot air heat source system is constituted by the fourth heat exchanger 82, a thermal medium tank 84, a heating circulating pump 85, a fifth heat exchanger 86 which is disposed on the hot air supply unit side as will be described later, a thermal medium circulating tube arrangement 87, and a thermal medium (not shown) which circulates among these members. In addition, a temperature adjusting portion 89 which adjusts the temperature of the thermal medium circulating through the thermal medium circulating tube arrangement 87 using a part of heating steam 88 generated in the boiler apparatus 65 is provided in the middle of the thermal medium circulating tube arrangement 87.

A part of the thermal medium circulating tube arrangement 87 is laid as a heat transfer tube within the post-drying hopper 62 so as to adjust the temperature of the dried brown coal particles 61 stored within the hopper 62. Thus, moisture reabsorption of the brown coal particles 61 is suppressed and the moisture content thereof is kept within a predetermined range. Particularly since brown coal has a porous structure, the brown coal has a high moisture content easily, and the moisture absorption characteristic appears when the brown coal is dried.

Although a part of the thermal medium circulating tube arrangement 87 constituting the second hot air heat source system is laid within the post-drying hopper 62 in this embodiment, a part of the thermal medium circulating tube arrangement 79 of the first hot air heat source system may be laid within the post-drying hopper 62.

Massive brown coal 60 supplied from the raw material silo 7 is pulverized into particles whose particle size is about 1 mm, by a plurality of pulverizers 8a, 8b and 8c and a vibration screen 90, and inputted as coarse particles 2 into the pre-drying hopper 9. The gate valves 10 and 11 are driven individually in sync with the conveyance timing of the drying conveyer apparatus 1 so as to cut down a fixed amount of the coarse particles 2 from the pre-drying hopper 9. The coarse particles 2 are inputted into an apron 25.

On the other hand, the dried brown coal particles 61 fluidized and dried by hot air 49 supplied from below the apron 25 are inputted into the post-drying hopper 62 from the discharge port 33 of the drying conveyer apparatus body 1. A level sensor 91 for detecting the bed level of the brown coal particles 61 is provided in the post-drying hopper 62. Based on a detection signal from the level sensor 91, rotation of a motor 92 for rotating the driving pulley 22 of the drying conveyer apparatus body 1 is controlled (ON/OFF controlled). The minimum coal bed thickness within the hopper 62 for keeping vacuum is maintained by the control of the bed height of the brown coal particles 61.

The hot air containing moisture and fine particles as a result of drying (dehumidifying) the coarse particles 2 is introduced into the cyclone separator 18 by the fine particle capturing tube arrangement 47. The fine particles are separated by the cyclone separator 18 and supplied to the post-drying hopper 62.

Heat is recovered from the hot air leaving the cyclone separator 18 via a hot air circulating tube arrangement 93 by a sixth heat exchanger 94. The hot air is then introduced into a steam-water separator 95. The moisture in the hot air is recovered as condensed water by cooling water 96 circulating through the steam-water separator 95. The reference numeral 97 represents a condensate tank. The condensed water stored in the condensate tank 97 is sent to a water treatment apparatus (not shown), in which the condensed water undergoes suitable treatment.

The air passing through the steam-water separator 95 is further dehumidified by a mist separator 98, then heated in the sixth heat exchanger 94, pressurized by a hot air circulating fan 99 and supplied to the drying conveyer apparatus body 1. The reference numeral 112 represents a vacuum pump for sucking a part of the air which has passed through the mist separator 98.

Since there is a danger of spontaneous ignition in brown coal, there are provided a nitrogen generator body 100, a nitrogen reservoir 101 which stores generated nitrogen gas, a nitrogen gas supply tube arrangement 102 which supplies the nitrogen gas to the hot air circulating tube arrangement 93 and the fan mill 64, a nitrogen gas supply valve 103 which is provided in the middle of the nitrogen gas supply tube arrangement 102, and an oxygen concentration meter 104 which is provided in the middle of the hot air circulating tube arrangement 93.

When brown coal is used, the concentration of oxygen in the hot air is monitored in the oxygen concentration meter 104. When the concentration of oxygen is higher than a specified value, the nitrogen gas supply valve 103 is opened to inject the nitrogen gas so that the interior of the hot air circulating system and the interior of the fan mill 64 can be made inactive enough to prevent the brown coal from spontaneously igniting.

In addition, a CO concentration meter 105a is placed on the circulating path of the hot air such as the hot air circulating tube arrangement 93, and an inert steam tube arrangement 107 is connected to places needing inert steam 106, such as the drying conveyer apparatus body 1, the pre-drying hopper 9, the cyclone separator 18, the post-drying hopper 62 and the fan mill 64.

Further, an inert steam backup tube arrangement 109 is connected to a part of the nitrogen gas supply tube arrangement 102 through a valve 108, and a front end part of the inert steam backup tube arrangement 109 is connected to the inert steam tube arrangement 107.

Furthermore, a CO concentration meter 105b is also placed in the pre-drying hopper 9, and an outlet hot air thermometer 113 for measuring the temperature of the hot air in the outlet of the drying conveyer apparatus body 1 is placed. Detection signals of the CO concentration meters 105a and 105b and the outlet hot air thermometer 113 are imported periodically by a selector 114.

For example, when the thermal electric power generation system makes a trip, nitrogen gas is first injected into necessary places using the aforementioned nitrogen gas supply system till the concentration of oxygen within the system decreases to a predetermined value. Thus, the interior of the system is made inactive. When the concentration of CO increases, nitrogen gas is injected again till the concentration of oxygen reaches the specified value.

On the other hand, when the temperature of the hot air in the outlet of the drying conveyer apparatus body 1 increases, the inert steam 106 is injected continuously till the temperature decreases to a predetermined value. For example, auxiliary steam obtained from the boiler apparatus 65 may be decompressed and dehumidified to be used as the inert steam 106.

When the brown coal 60 is pulverized by the pulverizers 8 as shown in Fig. 8, it can be anticipated that the coarse particles 2 stored in the pre-drying hopper 9 ignites spontaneously due to sparks generated by impurities such as rock and iron ore mixed into the raw material. Therefore, the CO concentration meter 105b is also placed in the pre-drying hopper 9 as described previously. When a sign of spontaneous ignition of the coarse particles 2 is found from the monitored concentration of CO in the hopper, the inert steam 106 is injected into the pre-drying hopper 9 so as to prevent the spontaneous ignition from occurring.

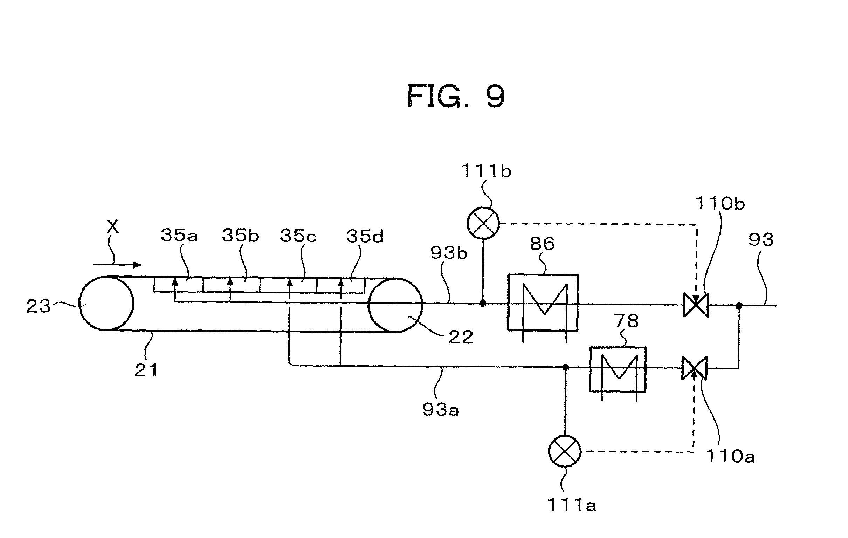

Fig. 9 is a main portion enlarged system diagram for explaining a control system of hot air in the thermal electric power generation system shown in Fig. 8.

The moisture in the coarse particles 2 is reduced gradually so that the weight of the coarse particles 2 is reduced in the course where the coarse particles 2 are being dried as described above. It is therefore necessary to supply the volume of the hot air 49 meeting the degree of drying (specific gravity) of the coarse particles 2 in accordance with the position of the wind box 35.

In this embodiment, therefore, the wind box 35 is divided into four wind boxes 35a, 35b, 35c and 35d from the upstream side to the downstream side in the coarse particle conveyance direction X. The hot air circulating tube arrangement 93 for sending the hot air to the wind box 35 is also halfway branched into two systems, that is, a first hot air circulating tube arrangement 93a and a second hot air circulating tube arrangement 93b. The first hot air circulating tube arrangement 93a is connected to the two wind boxes 35c and 35d on the downstream side in the conveyance direction. The second hot air circulating tube arrangement 93b is connected to the two wind boxes 35a and 35b on the upstream side in the conveyance direction.

In addition, the third heat exchanger 78 (see Fig. 5) which uses the heat of exhaust gas, a first valve 110a which is disposed on the upstream side of the third heat exchanger 78 in the flow direction of the hot air, and a first thermometer 111a which is disposed on the downstream side of the third heat exchanger 78 in the flow direction of the hot air are provided in the middle of the first hot air circulating tube arrangement 93a. In the same manner, the fifth heat exchanger 86 (see Fig. 5) which uses the heat of steam extracted from the steam turbine 80, a second valve 110b which is disposed on the upstream side of the fifth heat exchanger 86 in the flow direction of the hot air, and a second thermometer 111b which is disposed on the downstream side of the fifth heat exchanger 86 in the flow direction of the hot air are provided in the middle of the second hot air circulating tube arrangement 93b.

In this manner, according to this embodiment, the wind boxes 35 are classified into two groups, that is, the group of the wind boxes 35a and 35b on the upstream side in the coarse particle conveyance direction and the group of the wind boxes 35c and 35d on the downstream side likewise. The detection signal of the second thermometer 111b is monitored and the opening degree of the second valve 110b is adjusted to control the volume of the hot air 49 supplied to the upstream wind boxes 35a and 35b. In addition, configuration is made so that the detection signal of the first thermometer 111a is monitored and the opening degree of the first valve 110a is adjusted to control the volume of the hot air 49 supplied to the downstream wind boxes 35c and 35d.

The volume of the hot air 49 supplied to the downstream wind boxes 35c and 35d is set to be smaller than the volume of the hot air 49 supplied to the upstream wind boxes 35a and 35b.

In this embodiment, the heat of exhaust gas and heat of steam extracted from the steam turbine 80 are used as heat sources of the hot air 49. The steam extracted from the steam turbine 80 is generally higher in temperature than the exhaust gas. Therefore, the temperature of the hot air 49 supplied to the wind boxes 35a and 35b on the upstream side in the coarse particle conveyance direction is controlled using the heat of the steam extracted from the steam turbine 80, and the temperature of the hot air 49 supplied to the wind boxes 35c and 35d on the downstream side in the coarse particle conveyance direction is controlled using the heat of the exhaust gas.

Incidentally, in this embodiment, the third heat exchanger 78 and the fifth heat exchanger 86 correspond to the heat exchanger 16 shown in Fig. 1.

Drying conditions including the cut-out amount of the coarse particles 2, the conveyance velocity of the drying conveyer apparatus body 1, the volume and the temperature of the hot air 49 etc. are set so that the drying time of one drying conveyer apparatus body 1 according to the embodiment can be about several minutes.

Further, this system includes not one but a plurality of drying conveyer apparatus bodies 1 provided in parallel, so that the dried brown coal particles 61 obtained from the respective drying conveyer apparatus bodies 1 can be collected in the post-drying hopper 62.

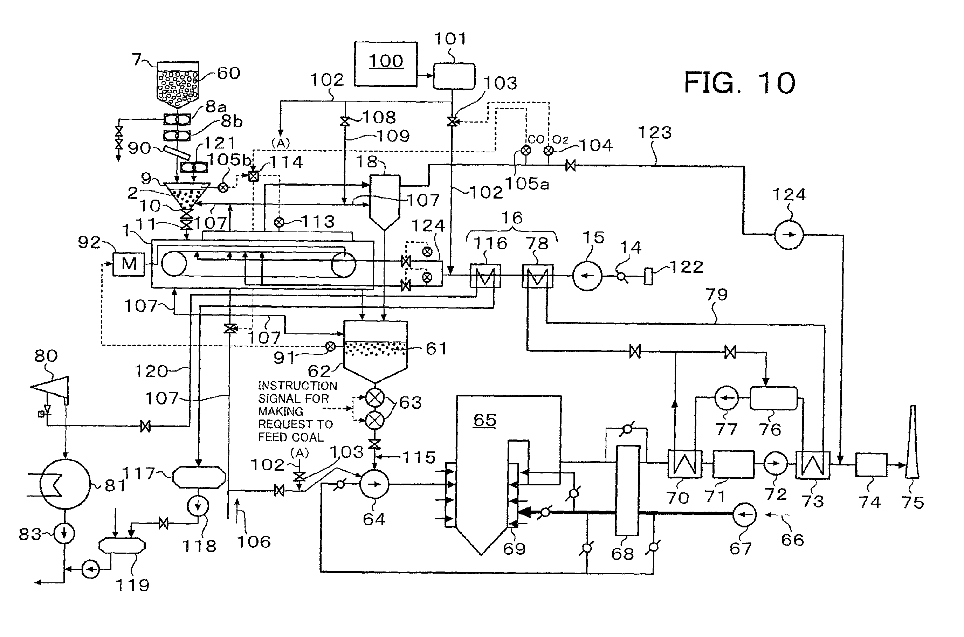

Fig. 10 is a system diagram showing a second application example in which the drying conveyer apparatus according to the embodiment of the invention is applied to a thermal electric power generation system.

(Schematic Configuration of Second Thermal Electric Power Generation System)

Dried brown coal particles 61 stored in a post-drying hopper 62 are supplied to a fan mill 64 through a rotary seal 63. High-temperature combustion air 66 is supplied to the fan mill 64. The brown coal particles further made into fine powder by the fan of the fan mill 64 are conveyed into a boiler apparatus 65 together with the combustion air 66.

There is a fear that the dried brown coal particles 61 within the hopper 62 may ignite spontaneously due to heat transfer from the fan mill 64. Therefore, cool air 115 is supplied to a tube arrangement between the hopper 62 and the fan mill 64.

On the other hand, the combustion air 66 is supplied to a wind box 69 of the boiler apparatus 65 through an air preheater 68 by a forced draft fan (FDF) 67 so as to engage in combustion of the brown coal particles 61. Exhaust gas generated by the combustion passes through the air preheater 68, a first heat exchanger 70, an electrostatic precipitator (EP) 71, an induced draft fan (IDF) 72, a second heat exchanger 73, a desulfurizer 74, etc. and is then discharged from a chimney 75 to the atmosphere.

A first hot air heat source system is constituted by the first heat exchanger 70, the second heat exchanger 73, a thermal medium tank 76 and a heating circulating pump 77 which are placed between the first heat exchanger 70 and the second heat exchanger 73, a third heat exchanger 78 which is disposed on the hot air supply unit side as will be described later, a thermal medium circulating tube arrangement 79, and a thermal medium (not shown) which circulates among these members.

On the other hand, steam which has finished its work in a low-pressure steam turbine 80 is sent to a condenser 81. A part of the steam is extracted and sent to a sixth heat exchanger 116 which is disposed on the downstream side of the third heat exchanger 78 in the hot air supply direction. Drain generated by heat exchange in the sixth heat exchanger 116 passes through a drain tank 117, a drain pump 118 and a low-pressure heater drain tank 119, and is then discharged to the outside of the system together with condensed water from a condensate pump 83.

A second hot air heat source system is constituted by a steam supply tube arrangement 120 which supplies the steam extracted from the low-pressure steam turbine 80 to the sixth heat exchanger 116, and the sixth heat exchanger 116.

Massive brown coal 60 supplied from a raw material silo 7 is pulverized into particles whose particle size is about 1 mm, by a plurality of pulverizers 8a and 8b and a vibration screen 90, and inputted as coarse particles 2 into a pre-drying hopper 9.

Biomass such as wood chips sieved out by the vibration screen 90 is crushed by a biomass crusher 121 and inputted into the pre-drying hopper 9 together with the coarse particles 2. Gate valves 10 and 11 are driven individually in sync with the conveyance timing of the drying conveyer apparatus 1 so as to cut down a fixed amount of the coarse particles 2 from the pre-drying hopper 9. The coarse particles 2 are inputted into an apron 25.

On the other hand, the air as the hot air 49 is taken in from an air intake port 122 by a suction damper 14 and a blower 15, heated into the hot air 49 by the third heat exchanger 78 and the sixth heat exchanger 116, and supplied from below each apron 25.

Although both the heat of the exhaust gas obtained by the third heat exchanger 78 and the heat of the steam extracted from the steam turbine 80 and obtained by the sixth heat exchanger 116 are used as heat sources for the hot air 49 in this embodiment, one of the heats, for example, the heat of the steam extracted from the steam turbine 80 may be used for generating the hot air 49.

The dried brown coal particles 61 fluidized and dried by the hot air 49 are inputted into the post-drying hopper 62 from a discharge port 33 of the drying conveyer apparatus body 1. A level sensor 91 for detecting the bed level of the brown coal particles 61 is provided in the post-drying hopper 62. Based on a detection signal from the level sensor 91, rotation of a motor 92 for rotating a driving pulley 22 of the drying conveyer apparatus body 1 is controlled (ON/OFF controlled). The minimum coal bed thickness within the hopper 62 for keeping vacuum is maintained by the control of the bed height of the brown coal particles 61.

The hot air containing fine particles as a result of drying the coarse particles 2 is introduced into a cyclone separator 18 by a fine particle capturing tube arrangement 47. The fine particles are separated by the cyclone separator 18 and supplied to the post-drying hopper 62.

On the other hand, the hot air leaving the cyclone separator 18 passes through an exhaust tube arrangement 123 and an exhaust fan 124, and is then discharged to a tube arrangement on the upstream side of the desulfurizer 74.

Since there is a danger that brown coal may spontaneously ignite, there are provided a nitrogen generator body 100, a nitrogen reservoir 101 which stores generated nitrogen gas, a nitrogen gas supply tube arrangement 102 which supplies the nitrogen gas to a hot air circulating tube arrangement 124 and the fan mill 64, a nitrogen gas supply valve 103 which is provided in the middle of the nitrogen gas supply tube arrangement 102, and an oxygen concentration meter 104 which is provided in the middle of the exhaust tube arrangement 123.

When brown coal is used, the concentration of oxygen in the hot air is monitored in the oxygen concentration meter 104. When the concentration of oxygen is higher than a specified value, the nitrogen gas supply valve 103 is opened to inject the nitrogen gas so that the interior of the hot air supply system and the interior of the fan mill 64 can be made inactive enough to prevent the brown coal from spontaneously igniting.

In addition, a CO concentration meter 105a is placed on the circulating path of the hot air such as the exhaust tube arrangement 123, and an inert steam tube arrangement 107 is connected to places needing inert steam 106, such as the drying conveyer apparatus body 1, the pre-drying hopper 9, the cyclone separator 18, the post-drying hopper 62 and the fan mill 64.

Further, an inert steam backup tube arrangement 109 is connected to a part of the nitrogen gas supply tube arrangement 102 through a valve 108, and a front end part of the inert steam backup tube arrangement 109 is connected to the inert steam tube arrangement 107.

Furthermore, a CO concentration meter 105b is also placed in the pre-drying hopper 9, and an outlet hot air thermometer 113 for measuring the temperature of the hot air in the outlet of the drying conveyer apparatus body 1 is placed. Detection signals of the CO concentration meters 105a and 105b and the outlet hot air thermometer 113 are imported periodically by a selector 114.

For example, when the thermal electric power generation system makes a trip, nitrogen gas is first injected into necessary places using the aforementioned nitrogen gas supply system till the concentration of oxygen within the system decreases to a predetermined value. Thus, the interior of the system is made inactive. When the concentration of CO increases, nitrogen gas is injected again till the concentration of oxygen reaches a specified value.

On the other hand, when the temperature of the hot air in the outlet of the drying conveyer apparatus body 1 increases, the inert steam 106 is injected continuously till the temperature decreases to a specified value. For example, auxiliary steam obtained from the boiler apparatus 65 may be decompressed and dehumidified to be used as the inert steam 106.

When the brown coal 60 is pulverized by the pulverizers 8 as shown in Fig. 10, it can be anticipated that the coarse particles 2 stored in the pre-drying hopper 9 ignite spontaneously due to sparks generated by impurities such as rock and iron ore mixed into the raw material. Therefore, the CO concentration meter 105b is also placed in the pre-drying hopper 9 as described previously. When a sign of spontaneous ignition of the coarse particles 2 is found from the monitored concentration of CO in the hopper, the inert steam 106 is injected into the pre-drying hopper 9 so as to prevent the spontaneous ignition from occurring.

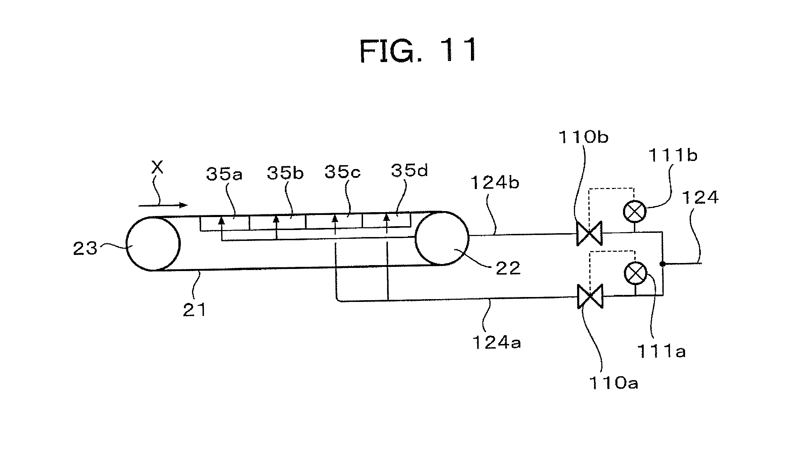

Fig. 11 is a main portion enlarged system diagram for explaining a control system of hot air in the thermal electric power generation system shown in Fig. 10.

The moisture in the coarse particles 2 is reduced gradually so that the weight of the coarse particles 2 is reduced in the course where the coarse particles 2 are being dried as described above. It is therefore necessary to supply the volume of the hot air 49 meeting the degree of drying (specific gravity) of the coarse particles 2 in accordance with the position of the wind box 35.

In this embodiment, therefore, the wind box 35 is divided into four wind boxes 35a, 35b, 35c and 35d from the upstream side to the downstream side in the coarse particle conveyance direction X. The hot air supply tube arrangement 124 for sending the hot air to the wind box 35 is also halfway branched into two systems, that is, a first hot air supply tube arrangement 124a and a second hot air supply tube arrangement 124b. The first hot air supply tube arrangement 124a is connected to the two wind boxes 35c and 35d on the downstream side in the conveyance direction. The second hot air supply tube arrangement 124b is connected to the two wind boxes 35a and 35b on the upstream side in the conveyance direction.

In addition, a first valve 110a and a first thermometer 111a are provided in the middle of the first hot air supply tube arrangement 124a. In the same manner, a second valve 110b and a second thermometer 111b are provided in the middle of the second hot air supply tube arrangement 124b.

In this manner, according to this embodiment, the plurality of wind boxes 35 are classified into two groups, that is, the group of the wind boxes 35a and 35b on the upstream side in the coarse particle conveyance direction and the group of the wind boxes 35c and 35d on the downstream side likewise. The detection signal of the second thermometer 111b is monitored and the opening degree of the second valve 110b is adjusted to control the volume of the hot air 49 supplied to the upstream wind boxes 35a and 35b. In addition, configuration is made so that the detection signal of the first thermometer 111a is monitored and the opening degree of the first valve 110a is adjusted to control the volume of the hot air 49 supplied to the downstream wind boxes 35c and 35d.

The volume of the hot air 49 supplied to the downstream wind boxes 35c and 35d is set to be smaller than the volume of the hot air 49 supplied to the upstream wind boxes 35a and 35b.

Drying conditions including the cut-out amount of the coarse particles 2, the conveyance velocity of the drying conveyer apparatus body 1, the volume and the temperature of the hot air 49 etc. are set so that the drying time of one drying conveyer apparatus body 1 according to the embodiment can be about several minutes.

Further, this system includes not one but a plurality of drying conveyer apparatus bodies 1 provided in parallel, so that the dried brown coal particles 61 obtained from the respective drying conveyer apparatus bodies 1 can be collected in the post-drying hopper 62.

Although a large number of hole-like hot air introduction portions, that is, hot air blowing-out holes are provided in the bottom of each apron (conveyance member for receiving and conveying coarse particles) in the embodiment, the hot air introduction portions may be constituted by meshes or a large number of slits.

Although an example in which the wind boxes are classified into two groups located on the upstream side and the downstream side and two wind boxes are disposed in each group has been shown in the embodiment, the number of groups and the number of wind boxes in each group may be changed in accordance with necessity.

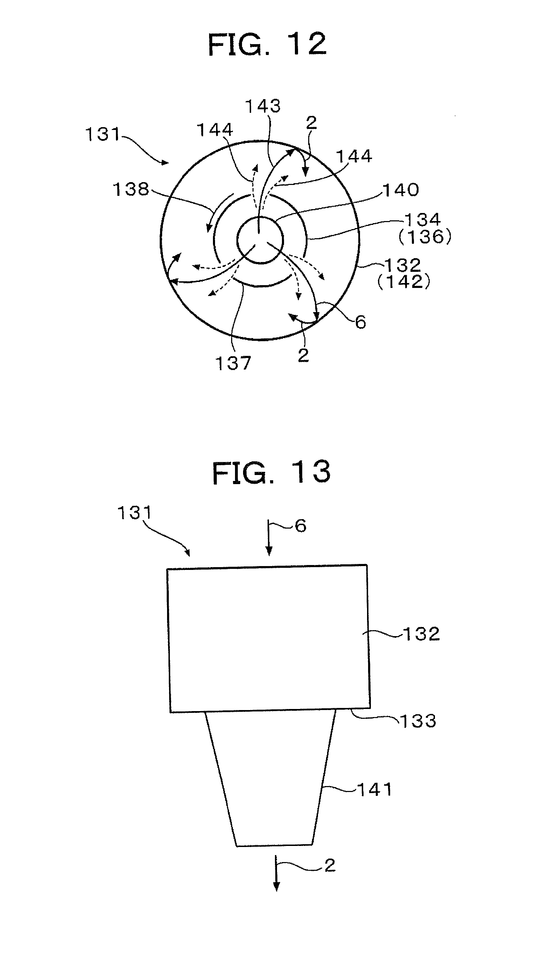

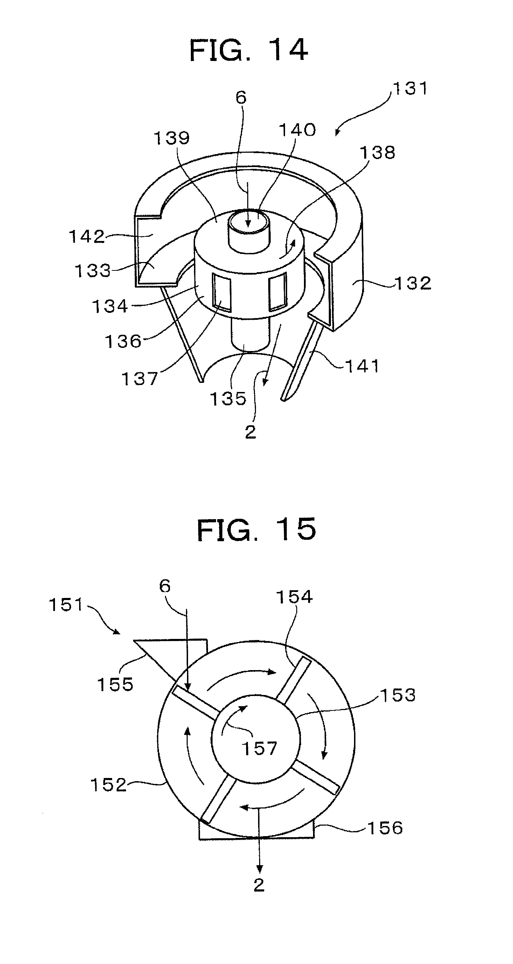

Figs. 12 to 14 are views showing another example of a pulverizer to which the invention is applied. Fig. 12 is a schematic plan view of the pulverizer. Fig. 13 is a side view of the pulverizer. Fig. 14 is a partially cutaway perspective view of the pulverizer.

(Another Example of Pulverizer)

This pulverizer 131 is a pulverizer (also referred to as a crusher) of a rotary centrifugal pulverizer system. In a specific configuration, inside a cylindrical casing 132 which is fixed, a cylindrical rotor 134 is disposed at a distance from a bottom part 133 of the casing 132 as shown in Fig. 14.

The rotor 134 is fixed to an upper part of a rotation shaft 135, so as to rotate integrally with the rotation shaft 135. In this embodiment, the rotor 134 rotates in the direction of an arrow 138 at a high circumferential velocity of 35 to 75 m/s. A large number of jet ports 137 are formed circumferentially in a circumferential wall 136 of the rotor 134.

As shown in Fig. 14, a raw material input port 140 is provided at a center part of a top plate 139 of the rotor 134. In addition, a discharge shoot 141 of the coarse particles 2 is provided continuously to the bottom part 133 of the casing 132.

Brown coal as the raw material 6 is inputted into the rotor 134 through the raw material input port 140. Since the rotor 134 is rotating at a high velocity, the raw material 6 inputted into the rotor 134 is jetted from the jet ports 137 due to centrifugal force, and collides with a circumferential wall 142 of the casing 132 (see Fig. 12). The raw material 6 is pulverized by the impact at that time. Coarse particles 2 generated by the pulverization are extracted from the discharge shoot 141 (see Figs. 13 and 14).

In the pulverizer 131 of the rotary centrifugal pulverizer system, the air is also entrained in the flow of the raw material 6 in the direction of the solid line arrow to thereby generate an air flow 143 in the direction of the broken line arrow when the raw material 6 is jetted from the rotor 134 due to the centrifugal force generated by the high-velocity rotation of the rotor 134 and pulverized by collision with the circumferential wall 142 of the casing 132 as shown in Fig. 12.

The coarse particles 2 pulverized and generated on the circumferential wall 142 collide with the air flow 143. Thus, the raw material 6 and the coarse particles 2 are primarily dried (preparatorily dried).

Although the embodiment is configured so that the raw material 6 jetted from the rotor 134 can be pulverized by collision with the circumferential wall 142 of the casing 132, configuration may be made in such a manner that another collision receiver member than the casing is provided to surround the rotor so that the raw material colliding with the collision receiver member can be pulverized.

Fig. 15 is a front view showing a schematic configuration of a pulverizer of a hammer crusher system which is used as a comparative example with the pulverizer of the rotary centrifugal pulverizer system.

In the pulverizer 151 of the hammer crusher system, a rotor 153 is disposed laterally within a casing 152, and a hammer 154 is provided in an outer circumferential part of the rotor 153 so as to protrude toward the inner circumferential surface side of the casing 152.

A raw material input port 155 attached to the casing 152 is disposed in a position corresponding to the hammer 154 which is rotationally moving. In addition, a discharge port 156 is provided in a lower part of the casing 152.

The rotor 153 (the hammer 154) is rotating at a high velocity in the direction of an arrow 157. Brown coal as the raw material 6 inputted from the raw material input port 155 is scattered away and crushed by the hammer 154. The mechanism is made in such a manner that the coarse particles 2 generated by the crushing can be extracted from the discharge port 156.

In the hammer crusher system pulverizer 151, which is based on the aforementioned pulverizer system, the flow of the air hardly occurs. Therefore, the raw material 6 and the coarse particles 2 are not primarily dried (preparatorily dried) by the flow of the air.

Next, the effect of the primary drying using the pulverizer will be described specifically.

(Effect of Primary Drying Using Pulverizer)

When the pulverizer 131 of the rotary centrifugal pulverizer system according to the embodiment is used, the coarse particles 2 can be not only dried by the drying conveyer apparatus but also preparatorily dried (primarily dried) in the pulverizer 131.

Specifically, when the pulverizer 131 of the rotary centrifugal pulverizer system is used, about 8% of the moisture content of the raw material (brown coal) 6 can be dried by the air flow 144 while the raw material (brown coal) 6 is pulverized into a predetermined size.

Further, the moisture content of the raw material (brown coal) 6 can be then dried up to about 15% by the drying conveyer apparatus. Thus, the thermal efficiency of the drying conveyer apparatus can be improved and the drying time in the drying conveyer apparatus can be shortened. Further, the drying conveyer apparatus can be made compact.

When the drying time of secondary drying in the drying conveyer apparatus is the same as when the primary drying is absent, the amount of gas supplied to the drying conveyer apparatus can be reduced. This is because the following expression is established.

The calorie supplied to the drying conveyer apparatus or the calorie Q (k) required for the secondary drying can be obtained by the following expression.

$$Q=H×V×t$$

where

H designates gas enthalpy (k/m$^3$N);
V designates gas volume rate (m$^3$N/h); and
t designates drying time (h).

In the drying conveyer apparatus according to the embodiment of the invention shown in Fig. 1, Experimental Example 1 using the pulverizer 131 of the rotary centrifugal pulverizer system as the pulverizers 8 and Comparative Example 1 using the pulverizer 151 of the hammer crusher system likewise will be described as to comparison in the ratio of moisture contained in brown coal and the ratio of energy required in the drying conveyer apparatus.

Description will be made with reference to Fig. 1. Brown coal whose moisture content was 53% was stored as the raw material 6 in the raw material silo 7, and the raw material 6 was then supplied to the crushers 8 and pulverized. Thus, the coarse particles 2 whose average particle size was about 1 mm were obtained.

The coarse particles 2 were once stored in the pre-drying hopper 9. After that, the gate valves 10 and 11 were driven individually in sync with the conveyance timing of the drying conveyer apparatus body 1 so as to supply a fixed amount of the coarse particles 2 to the drying conveyance apparatus body 1 quickly. The coarse particles 2 passing through the drying conveyer apparatus body 1 were dried. The dried coarse particles 2 (dried coal) were recovered from the outlet of the drying conveyer apparatus body 1.

The operating conditions of the apparatus were set so that the supply rate of the raw material 6 (brown coal) was 100 kg/h, the temperatures before and after drying the raw material 6 (brown coal) were 20°C and 50°C, and the moisture content of the dried coarse particles 2 (brown coal) was 15%.

Extracted were the raw material 6 (raw coal) from the raw material silo 7, the coarse particles 2 (pulverized coal) from the pre-drying hopper 9, and the dried coarse particles 2 (dried coal) from the outlet of the drying conveyer apparatus body 1, respectively. The contents of moisture of the raw material 6 (raw coal), the coarse particles 2 (pulverized coal) which had not yet been dried, and the coarse particles 2 (dried coal) which has been dried, were measured in conformity to JIS M8811 "COAL AND COKE - SAMPLING AND SAMPLE PREPARATION".

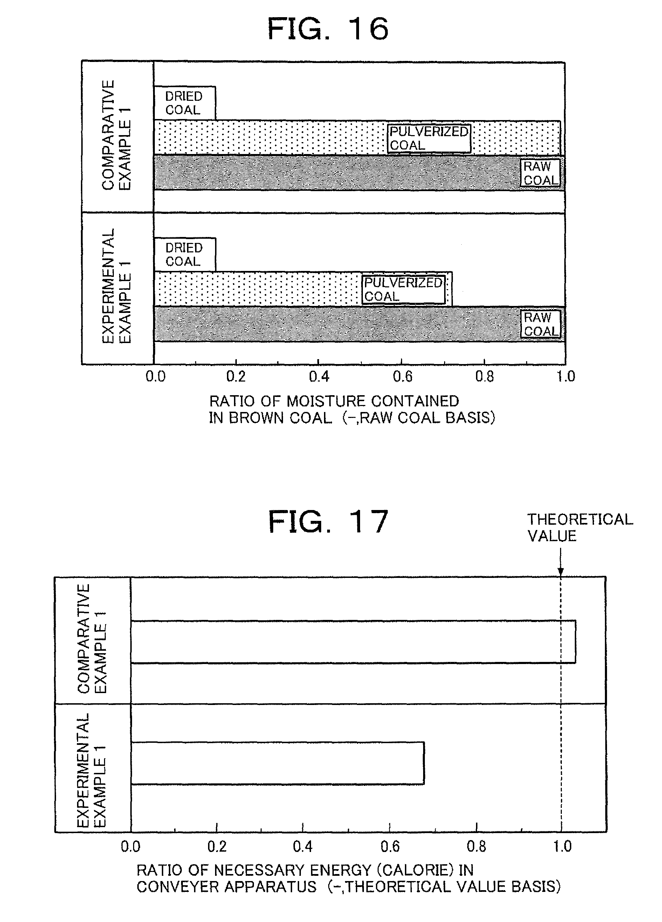

Fig. 16 is a graph showing the ratios of the moisture contents of the raw coal 6 (raw coal), the coarse particles 2 (pulverized coal) which had not yet been dried, and the coarse particles 2 (dried coal) which had been dried, in Experimental Example 1 (using the pulverizer of the rotary centrifugal pulverizer system) and Comparative Example 1 (using the pulverizer of the hammer crushers system). The ratios of moisture contents shown in Fig. 16 were expressed as ratios of moisture contents of the pulverized coal and the dried coal on a basis (1) of the moisture content of the raw coal.

The ratios of moisture contents of the pulverized coal and the dried coal are defined as follows.

```
ratio of moisture content of pulverized coal (-)

      = moisture content (kg/h) of pulverized coal /

moisture content (kg/h) of raw coal
```

```
ratio of moisture content of dried coal (-)

      = moisture content (kg/h) of dried coal / moisture

content (kg/h) of raw coal
```

As is apparent from the result of Fig. 16, the difference between the ratio of the moisture content of the pulverized coal and the ratio of the moisture content of the dried coal in Experimental Example 1 is smaller in value than that in Comparative Example 1. That is, even by means of the same drying conveyer apparatus, the amount of moisture to be dehumidified by drying in Experimental Example 1 using the pulverizer of the rotary centrifugal pulverizer system is smaller than that in Comparative Example 1 using the pulverizer of the hammer crusher system.

In the case of these conditions, energy (calorie) required for drying the coarse particles in the drying conveyer apparatus can be obtained by the total sum of (sensible heat of water required for increasing the temperature of water and steam from 20°C to 50°C: 125.4 kJ/kg - amount of dehumidified moisture), (sensible heat of steam: 53.8 kJ/kg - amount of dehumidified moisture) and (sensible heat of vaporization of steam required for vaporizing water: 2454 kJ/kg - amount of dehumidified moisture), that is, 2633.2 kJ/kg - amount of dehumidified moisture.

Accordingly, when the amount of dehumidified moisture is reduced in the drying conveyer apparatus, necessary energy (calorie) can be also reduced accordingly. The necessary energy (calorie) mentioned herein means net energy obtained without consideration of power and thermal loss.

Fig. 17 is a graph showing the necessary energy in the drying conveyer apparatus according to Experimental Example 1 and Comparative Example 1 by comparison. The necessary energy (calorie) in Experimental Example 1 is indicated as a relative value to the necessary energy (calorie) in Comparative Example 1 which is set as 1.

The necessary energy (calorie) in Fig. 17: 1 designates a theoretical value of the necessary energy (calorie) in the case of only the secondary drying (the coarse particles are dried only by the drying conveyer apparatus).

As is apparent from Fig. 17, the necessary energy (calorie) in Experimental Example 1 is about 30% lower than the theoretical value. This is because the air is entrained due to the use of the pulverizer of the rotary centrifugal pulverizer system in the course where the raw material is pulverized into coarse particles, so that the flow of the air can be formed to dry the coarse particles secondarily.

On the other hand, the necessary energy (calorie) in Comparative Example 1 is about 30% higher than the theoretical value.

As described previously, the coarse particles 2 dried secondarily are low in adhesiveness. When the coarse particles 2 are inputted into the conveyer apparatus, there is no fear that the coarse particles 2 may adhere to the inner surface of each apron 25 or the like. In addition, the fluidization 51 easily occurs in the coarse particles 2. Thus, the coarse particles 2 can be dried efficiently by the hot air 49 supplied from below the apron 25.

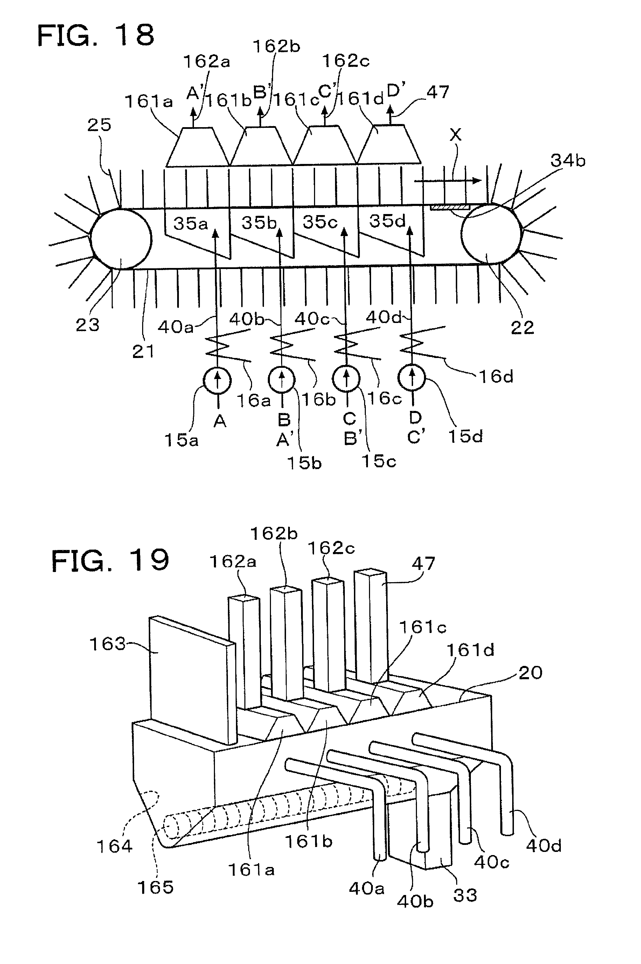

Next, the schematic configuration of a drying conveyer apparatus according to a second embodiment of the invention will be described with reference to Fig. 18 and Fig. 19. Fig. 18 is a schematic configuration diagram of the drying conveyer apparatus according to the second embodiment. Fig. 19 is a perspective view near a body of the drying conveyer apparatus.

(Configuration of Second Drying Conveyer Apparatus)

In the drying conveyer apparatus according to the first embodiment shown in Fig. 2, one hood (the housing 20 serves as the hood) is provided for a plurality of wind boxes 35. In the second embodiment, however, independent hoods 161a, 161b, 161c and 161d independent of each other are provided in positions corresponding to the blowing-out positions of the plurality of wind boxes 35a, 35b, 35c and 35d arranged in a conveyance direction X of an apron conveyer 21, respectively.

In the embodiment, the dimensions of the wind boxes 35a to 35d are uniform so that the dimensions of the independent hoods 161a to 161d corresponding thereto are also uniform.

As shown in Fig. 18, the independent hoods 161a to 161d are provided continuously in the conveyance direction X of the apron conveyer 21 substantially without any gap (including the case where a rubber plate is interposed between adjacent ones of the independent hoods as will be described later). In addition, a gap of several tens of mm is provided under the lower end parts of the independent hoods 161a to 161d so as to avoid contact with the aprons 25.

Hot air supply tubes 40a, 40b, 40c, 40d to which blowers 15a, 15b, 15c and 15d and heat exchangers 16a, 16b, 16c and 16d are added individually are connected to the wind boxes 35a, 35b, 35c and 35d respectively as shown in Fig. 18.

Exhaust tubes 162a, 162b and 162c are provided in upper parts of the independent hoods 161a, 161b and 161c. A front end part of the exhaust tube 162a is connected to a suction port B of the blower 15b adjacent thereto on the downstream side. A front end part of the exhaust tube 162b is connected to a suction port C of the blower 15c adjacent thereto on the downstream side. A front end part of the exhaust tube 162c is connected to a suction port D of the blower 15d adjacent thereto on the downstream side.

A fine particle capturing tube 47 is connected to an upper part of the independent hood 161d. A front end part of the fine particle capturing tube 47 is connected to a cyclone separator 18 as shown in Fig. 1.

In the case of this embodiment, the configuration is made as described previously so that the hot air supply unit 4 shared among the wind boxes 35 as shown in Fig. 2 is not provided.

The atmosphere (20°C) sucked through a suction port A of the blower 15a is heated to 150 °C by the heat exchanger 16a and supplied to the first wind box 35a disposed on the most upstream side of the apron conveyer 21 in the conveyance direction X, so as to perform a first stage of heating/drying on the coarse particles 2 (pulverized coal) passing above the first wind box 35a.

Moist air A' containing moisture to its saturated humidity in a space portion (drying chamber) formed above the first wind box 35a is sucked and discharged through the first independent hood 161a. The moist air A' is supplied to the suction port B of the blower 15b adjacent on the downstream side, through the exhaust tube 162a.

The moist air A' entering the suction port B is pressurized by the blower 15b, further heated by the heat exchanger 16b, and supplied as dried air to the second wind box 35b, so as to perform a second stage of heating/drying on the coarse particles 2 (pulverized coal) passing above the second wind box 35b.

Such a drying process is repeated sequentially, and the exhaust air in the final stage is sucked by the independent hood 161d, and sent to the cyclone separator 18 through the fine particle capturing tube 47. Thus, a system in which fine particles of the coal can be recovered from the exhaust air is formed.

The reference numeral 163 in Fig. 19 represents a measuring portion which is a part of a coarse particle supply unit 3. Though not shown, a first gate vale 10, a second gate valve 11 and a measuring tube portion 12 are provided internally.

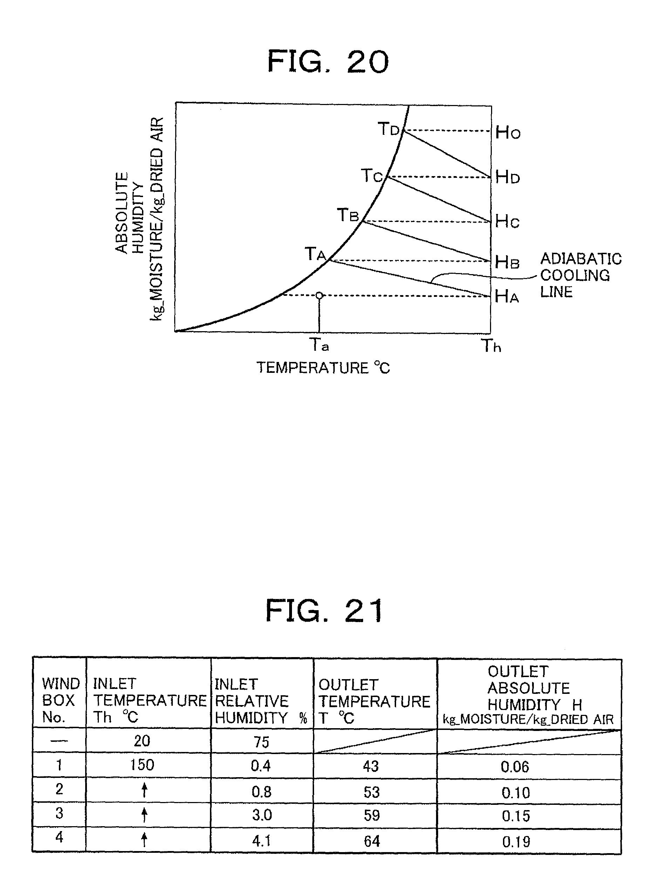

Fig. 20 is a moist air diagram in the drying conveyer apparatus according to this embodiment. The abscissa designates the temperature of the air, and the ordinate designates the absolute humidity of the air. The moist air diagram is standardly used for design of drying the air. The moist air diagram shows the relationship between the temperature and the humidity of the air.

As shown in Fig. 20, the atmosphere (temperature Ta, absolute humidity $H_A$) is heated to temperature $T_h$ by the first heat exchanger 16a while keeping the absolute humidity constant. In this first stage, moisture is not given or received but the absolute humidity remains $H_A$.

The heated air supplied to the space portion (drying chamber) formed above the first wind box 35a absorbs moisture from the coarse particles (pulverized coal), showing temperature $T_A$ and absolute humidity $H_B$ along an adiabatic cooling line shown in Fig. 20.

This is repeated sequentially, and the air is finally formed as exhaust air of temperature $T_D$ and absolute humidity $H_0$ (saturated humidity).

On the other hand, the background-art coal conveyer apparatus described in Fig. 25 has a configuration in which exhaust gas 219 sent from a combustion apparatus (not shown) is simply made to pass through a second drying chamber 217 and a first drying chamber 206 directly and sequentially.

For simulation of the coal conveyer apparatus, a drying apparatus according to Comparative Example 2, in which the air was heated by a heat exchanger only in the inlet to produce high-temperature air (simulating the exhaust gas 219 from the combustion apparatus) and the high-temperature air was made to pass through a plurality of drying chambers directly to thereby dry pulverized coal was manufactured. Specific comparison between the drying apparatus according to Comparative Example 2 and the drying conveyer apparatus according to this embodiment will be described with reference to Fig. 21.

In this comparison, the sucked air was set as standard atmosphere whose temperature was 20°C and whose relative humidity was 75% (absolute humidity 0.01 kg$_{-moisture}$/kg$_{-dried}$ air) .

As shown in Fig. 21, the air reached temperature 150°C and absolute humidity 0.01 kg$_{-moisture}$/kg$_{-dried}$ air due to the first heating using a heat exchanger, so as to heat the pulverized coal in the first drying chamber. As a result, the air reached temperature 43°C and absolute humidity 0.06 kg$_{-moisture}$/kg$_{-dried}$ air at the outlet of the first drying chamber. Since heating was performed once in Comparative Example 2, the humidity was kept in the exhaust gas at the outlet.

On the other hand, in this embodiment, heating and drying were repeated four times. Finally at the outlet, therefore, the temperature reached temperature 64°C and the absolute humidity reached 0.19 kg$_{-moisture}$/kg$_{-dried}$ air. Drying with about triple efficiency (0.19/0.06≈3) can be performed with the same amount of air.

Further, according to the embodiment, the usage of air can be reduced to 1/4 of that in Comparative Example 2. Therefore, ducts or exhaust gas dust-removal apparatus can be made compact on a large scale. Thus, space saving and cost reduction can be achieved.

In this embodiment, pressure control on each wind box 35 prevents steady leakage of the air, but some fluctuation of pressure is inevitable. Though not shown, therefore, a soft rubber plate is suspended between the independent hood 161 and the independent hood 161 so as to face the aprons 25 which are moving. Thus, the coarse particles 2 or the air is prevented from moving.

A part of the coarse particles 2 blown up from the fluidized bed within each apron 25 may fall down from the apron 25. In this embodiment, therefore, a slope 164 having a V-shape in section or the like is provided at a bottom part of the housing 20, so that the coarse particles 2 falling down can be collected by use of the slope 164. The collected coarse particles 2 are designed to be discharged from the housing 20 by a discharge unit such as a rotary feeder 165 disposed in the bottom part.

The coarse particles 2 inputted into each apron 25 passing above the first wind box 35a may contain a large amount of fine particles. Therefore, when the air sucked by the first independent hood 161a is sent directly to the downstream blowers 15b to 15d, there is a danger that the fan of each blower 15 or the like may be damaged.

In order to avoid this, the configuration may be adapted as follows. That is, the air sucked by the first independent hood 161a is made to pass through a dust removal unit such as a cyclone separator in which fine particles can be captured. Thus, the air containing few fine particles is sent to the downstream blower 15b.

Next, description will be made on the thermal efficiency of the drying conveyer apparatus according to the embodiment.

(Thermal Efficiency of Second Drying Conveyer Apparatus)

In the drying conveyer apparatus according to the embodiment, the temperature of the air (exhaust gas) is slightly high, but the amount of the air circulating is so small that the calorie taken away by the air, that is, thermal loss can be reduced. Thus, thermal efficiency is improved to achieve energy saving.

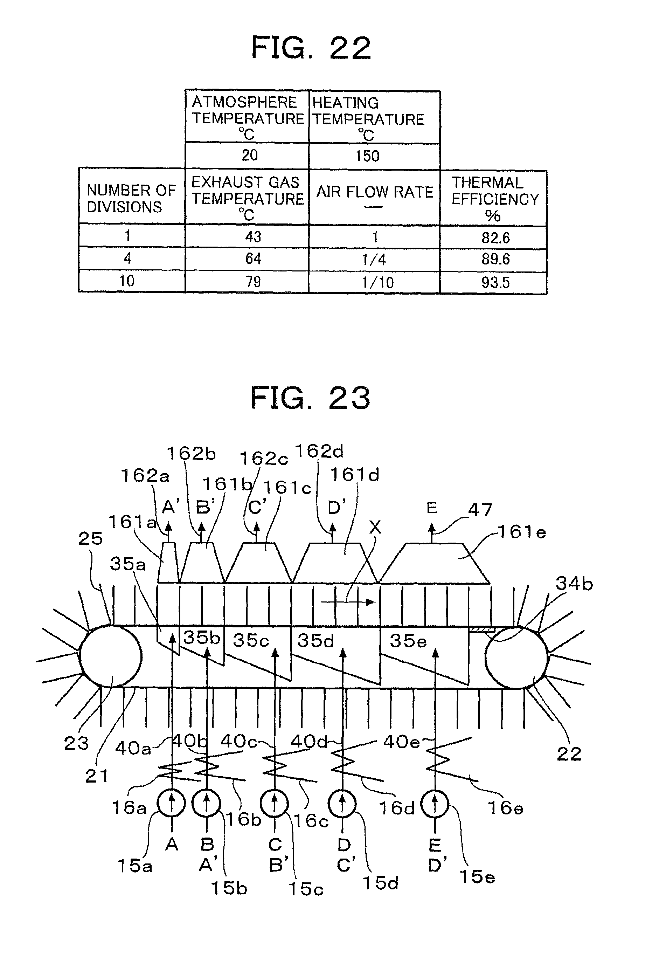

This circumstance will be described with reference to Fig. 22. The thermal efficiency is defined as [calorie consumed for drying (vaporization calorie of moisture)]/[heating calorie]. Fig. 22 shows the temperature of exhaust gas (air), the air flow rate and the thermal efficiency depending on the difference in the number of times of drying, that is, the number of divisions of the wind boxes 35 (independent hoods 161).

As shown in Fig. 22, the thermal efficiency is 82.6% when drying is performed once, 89.6% when drying is repeated four times, and high to be 93.5% when drying is repeated ten times. It is proved that the thermal efficiency is improved with the increase in the number of divisions (the number of times of repetition of drying).

Incidentally, in this example, the coarse particles (brown coal) were dried on the conditions that all the moisture of coarse particles was not vaporized but the moisture was reduced to about 1/2. The content of moisture in brown coal is generally very high. A large apparatus and high calorie are required for vaporizing all the moisture. Therefore, the example was applied to a half-dried state, in which the cost-effectiveness was the highest.

In addition, the wind boxes are divided into a plurality in the invention for the following reason.

That is, when the coarse particles are dried, the coarse particles are lightened in accordance with reduction of moisture, so as to reduce the air flow resistance with which the drying air passes among the coarse particles. As a result, when a common wind box is used without division, the volume of air on the upstream side in an early stage of drying is reduced while the volume of air on the downstream side where drying has been advanced is increased to scatter away the lightened coarse particles. When the wind box is divided into divisions, the flow rate of air in each division can be controlled independently so that the scattering of the coarse particles can be suppressed.

Next, the schematic configuration of a drying conveyer apparatus according to a third embodiment of the invention will be described with reference to Fig. 23.

(Configuration of Third Drying Conveyer Apparatus)

In the drying conveyer apparatus according to the third embodiment, the volume of air is further reduced by use of steam generated in a drying chamber on the upstream side of the apron conveyer 21 in the conveyance direction X. In the second embodiment shown in Fig. 18, the content of moisture in the air increases on the more downstream side, so as to increase the volume flow rate. When the wind boxes 35 are made to have the same dimensions, the velocity of air jet flow increases in more downstream one of the wind boxes 35. Thus, it is highly likely that the coarse particles 2 may scatter away from the wind box 35.

This embodiment is accomplished to solve the problem. As shown in Fig. 23, the wind boxes 35a to 35e are arranged in parallel along the conveyance direction X of the apron conveyer 21. The dimensions of the wind boxes 35 increase gradually from the upstream side to the downstream side.

The dimensions of the wind boxes 35 are adjusted in consideration of the aforementioned increase in volume flow rate. As a result, the air jet flow rate becomes substantially uniform among the wind boxes 35a to 35e, so that the scattering of the coarse particles 2 on the downstream side can be suppressed.

As shown in Fig. 23, it is necessary to change the dimensions of the independent hoods 161a to 161e correspondingly to and in accordance with the change in the dimensions of the wind boxes 35a to 35e.

In this embodiment, the dimensions of the wind boxes 35a to 35e are increased sequentially. However, the dimensions of the wind boxes 35 may be increased stepwise so that the scattering of the coarse particles 2 on the downstream side can be suppressed.

In the second and third embodiments, the length of each wind box 35 and the length of each independent hood 161 in the conveyance direction X are designed to be almost as long as the length of each apron 25 in the conveyance direction X or the total length of a plurality of grouped aprons 25 in the conveyance direction X as shown in Fig. 18 and Fig. 23.

In the embodiments of the invention, the apron conveyer is used as the drying conveyer apparatus. However, a conveyer of another configuration such as a bucket conveyer may be used.

The structure of each conveyance member is not limited, but it will go well if a fluidized bed can be formed on each conveyance member when an object to be conveyed is being conveyed.

In addition, the configuration of the drying conveyer apparatus for circulating and moving the object to be conveyed in the conveyance direction or the support structure of the conveyance members or the like is not limited to the illustrated one.

In the embodiments of the invention, heated drying air is used as drying gas. However, heated exhaust gas or the like may be used.

Each embodiment of the invention shows an example in which solid fuel such as coal is supplied to a thermal electric power generation plant. However, the invention can be applied to another technical field in which solid fuel is supplied to combustion equipment such as a cement plant or a chemical plant.

The case where coal is dried and dehumidified has been described in each embodiment of the invention. However, the invention can be applied not only to drying and dehumidifying coal but also to drying and dehumidifying particles, powder, chips or fragments such as sludge, foodstuff, wood chips, municipal waste, etc.

Next, effect of each claim of the invention will be described below.

(Effect of Each Claim)

According to the configuration of Claim 1, coarse particles can be dried efficiently and uniformly due to formation of a fluidized bed.

According to the configuration of Claim 2, suitable drying can be performed in accordance with the dried state of an object to be conveyed.

According to the configuration of Claim 3, suitable drying can be performed in each wind box.

According to the configuration of Claim 4, the moving wind boxes can be lightened in weight.

According to the configuration of Claim 5, falling particles can be discharged without staying within the wind boxes.

According to the configuration of Claim 6, measuring and drying the object to be conveyed can be achieved by a single drying conveyer apparatus so as to achieve reduction in cost and reduction in installation space.

According to the configuration of Claim 7, scattering particles of the object to be conveyed can be captured to improve the work environment and prevent loss of the object to be conveyed.

According to the configuration of Claim 8, the drying air can be recycled.

According to the configuration of Claim 9, loss of the object to be conveyed can be prevented.

According to the configuration of Claim 10, the dried state of the object to be conveyed can be kept properly even if the object has remoistability.

According to the configuration of Claim 11, the object to be conveyed can be prevented from falling down into the conveyer from the air jet portions of a conveyance member when the object is inputted into the conveyance member.

According to the configuration of Claim 12, the object to be conveyed which has been dried can be prevented from falling down into the conveyer from the air jet portions of the conveyance member.

According to the configuration of Claim 13, the object to be conveyed can be prevented from staying on the inner bottom surface of the housing and the interior of the housing can be kept clean.

According to the configuration of Claim 14, coal can be effectively prevented from spontaneously igniting within the housing.

According to the configuration of Claim 15, proper response can be made when the apparatus makes a trip.

According to the configuration of Claim 16, coal can be effectively prevented from spontaneously igniting within the housing.

According to the configuration of Claim 17, trouble such as spontaneous ignition of coal within the scattering particle capturing unit and the post-drying hopper can be prevented.

According to the configuration of Claim 18, coal can be effectively prevented from spontaneously igniting within the pre-drying hopper.

According to the configuration of Claim 19, the thermal efficiency of the drying conveyer apparatus can be improved, the drying time of the drying conveyer apparatus can be shortened, and the drying conveyer apparatus can be made compact.

According to the configuration of Claim 20, drying capacity can be increased when the same volume of drying gas is used. On the other hand, when the drying capacity is made the same, the usage of the drying gas can be reduced so that the apparatus can be made compact, and the space can be saved.

According to the configuration of Claim 21, the object to be conveyed and the drying gas are restrained from moving among the independent hoods, so that the effect of installation of the independent hoods can be exerted satisfactorily.

According to the configuration of Claim 22, coal can be effectively prevented from spontaneously igniting within the pre-drying hopper.

According to the configuration of Claim 23, drying brown coal or the like can be performed efficiently and suitably.

According to the configuration of Claim 24, heat from a steam turbine can be used effectively for drying coal in a thermal electric power generation plant. In addition, due to reduction in moisture of coal inputted into a coal fired boiler apparatus, the volume of combustion exhaust gas produced and discharged is also reduced so that the coal fired boiler apparatus and combustion exhaust gas treatment equipment placed on the downstream side of the coal fired boiler apparatus can be made compact.

According to the configuration of Claim 25, heat of exhaust gas from a coal fired boiler apparatus can be used effectively for drying coal in a thermal electric power generation plant. In addition, in the same manner as in the configuration of Claim 24, the coal fired boiler apparatus and combustion exhaust gas treatment equipment placed on the downstream side of the coal fired boiler apparatus can be made compact.

According to the configuration of Claim 26, the coal fired boiler apparatus can be made compact.

According to the configuration of Claim 27, drying brown coal or the like in a thermal electric power generation plant can be performed efficiently and suitably.

REFERENCE SIGNS LIST

1: drying conveyer apparatus body, 2: coarse particle, 3: coarse particle supply unit, 4: hot air supply unit, 5: scattering particle capturing unit, 6: raw material, 7: raw material silo, 8: pulverizer, 9: pre-drying hopper, 10: first gate valve, 11: second gate valve, 12: measuring tube portion, 15, 15a to 15d: blower, 16,16a to 16d: heat exchanger, 18: cyclone separator, 20: housing, 25: apron conveyer, 22: driving pulley, 23: tension pulley, 25: apron, 26: bottom plate, 27: back plate, 29: hot air blowing-out hole, 31: to-be-detected portion, 32: reception space, 33: discharge port, 34a: supply-side closing plate, 34b: discharge-side closing plate, 35,35a to 35d: wind box, 36: bottom plate, 37a,37b: side plate, 38: hot air introduction tube, 39: falling particle discharge hole, 40,40a to 40d: hot air supply tube, 41a,41b: blow-through prevention member, 42: air jet nozzle, 43: position sensor, 44: cleaning chain conveyer, 47: fine particle capturing tube arrangement, 48: fine particle return tube arrangement, 49: hot air, 51: fluidization, 60: brown coal, 61: dried brown coal particle, 62: post-drying hopper, 64: fan mill, 65: coal fired boiler apparatus, 70: first heat exchanger, 73: second heat exchanger, 78: third heat exchanger, 80: low-pressure steam turbine, 82: fourth heat exchanger, 86: fifth heat exchanger, 94: sixth heat exchanger, 95: steam-water separator, 100: nitrogen generator, 102: nitrogen gas supply tube arrangement, 104: oxygen concentration meter, 105a,105b: CO concentration meter, 106: inert steam, 107: inert steam tube arrangement, 109: inert steam backup tube arrangement, 110a: first valve, 110b: second valve, 111a: first thermometer, 111b: second thermometer, 113: outlet hot air thermometer, 116: sixth heat exchanger, 131: pulverizer of rotary centrifugal pulverizer system, 132: casing, 133: bottom part, 134: rotor, 135: rotation shaft, 136: circumferential wall, 137: jet port, 140: raw material input port, 141: discharge shoot, 142: circumferential wall, 143: flow of raw material, 144: flow of air, 161a to 161e: independent hood, 162a to 162d: exhaust tube, and X: apron conveyer (coarse particle) conveyance direction.

**Claims**

1. A drying conveyer apparatus comprising:

   a pair of driving shaft bodies which are disposed at a predetermined distance from each other; and
   conveyance members which are provided between the driving shaft bodies and which are rotated around the driving shaft bodies so as to store and convey an object to be conveyed;
   wherein:

   the conveyance members are fluidized bed forming conveyance members each provided with a gas jet portion in a bottom part thereof, the gas jet portion jetting drying gas;
   a wind box is provided for supplying the drying gas from below the fluidized bed forming conveyance members which are moving; and
   when each of the fluidized bed forming conveyance members passes over the wind box, the drying gas is jetted from the gas jet portion into the fluidized bed forming conveyance member so as to dry the object while forming a fluidized bed of the object.

2. A drying conveyer apparatus according to Claim 1, wherein:

a flow rate or a temperature of the drying gas supplied to the wind box can be adjusted in accordance with a dried state of the object.

3. A drying conveyer apparatus according to Claim 1, wherein:

the wind box includes a plurality of wind boxes provided in a conveyance direction of the object, and a flow rate or a temperature of the dying gas supplied to an upstream one of the wind boxes disposed upstream in the conveyance direction of the object is different from a flow rate or a temperature of the drying gas supplied to a downstream one of the wind boxes disposed downstream in the conveyance direction of the object.

4. A drying conveyer apparatus according to Claim 1, further comprising:

a housing which receives a body of the conveyer apparatus so as to isolate the body of the conveyer apparatus from outside air and which has a discharge port for taking out the dried object; wherein:

each of the fluidized bed forming conveyance members includes a bottom plate provided with the gas jet portion, and a back plate provided erectly from a downstream end part of the bottom plate in a moving direction of the fluidized bed forming conveyance member so that an upstream side of the fluidized bed forming conveyance member in the moving direction thereof and an upper side of the fluidized bed forming conveyance member are opened;
blow-through prevention members are placed within the housing so that the blow-through prevention members extend from one of the driving shaft bodies to the other of the driving shaft bodies correspondingly to left and right side faces of the fluidized bed forming conveyance members; and
the upstream side of each of the fluidized bed forming conveyance members in the moving direction thereof is closed with the back plate of the adjacent and previous one of the fluidized bed forming conveyance members and the left and right side faces of the fluidized bed forming conveyance members are covered with the blow-through prevention members, so that a space which can receive pulverized pieces of the object can be formed on the inside of the fluidized bed forming conveyance member.

5. A drying conveyer apparatus according to Claim 1, wherein:

a bottom plate of the wind box is inclined to be lower in level from one end part thereof toward the other end part thereof, and a falling particle discharge port through which particles of the object falling down from the fluidized bed forming conveyance members are discharged from the wind box is formed in the lower end part of the bottom plate or a lower end part of the side plate connected to the lower end part of the bottom plate.

6. A drying conveyer apparatus according to Claim 1, wherein:

a to-be-conveyed object supply unit which inputs the object into the fluidized bed forming conveyance members is provided above one of the paired driving shaft bodies;
the to-be-conveyed object supply unit includes:

a pre-drying hopper which stores the object;
a first gate valve which is provided in a lower part of the pre-drying hopper;
a measuring tube portion which is provided in a lower part of the first gate valve; and
a second gate valve which is provided in a lower part of the measuring tube portion;
a position sensor which detects arrival of each of the fluidized bed forming conveyance members is provided under the to-be-conveyed object supply unit;
the second gate valve is closed, the first gate valve is opened, and a part of the object stored in the pre-drying hopper is loaded in the measuring tube portion so as to be measured; and
when the arrival of each of the fluidized bed forming conveyance members is detected by the position sensor in a state where the first gate valve and the second gate valve are closed, the second gate valve is opened so that the object loaded in the measuring tube portion can be inputted into the fluidized bed forming conveyance member.

7. A drying conveyer apparatus according to Claim 1, further comprising:

a housing which receives a body of the drying conveyer apparatus so as to isolate the body of the drying conveyer apparatus from outside air and which has a discharge port for taking out the dried object; and
a scattering particle capturing unit which captures scattering particles of pulverized pieces of the object contained in drying gas staying in the housing when the drying gas is introduced to the scattering particle capturing unit.

8. A drying conveyer apparatus according to Claim 7, further comprising:

a moisture removing unit which removes moisture from the gas which has passed through the scattering particle capturing unit and contains moisture;
a gas heating unit which heats the gas which has passed through the moisture removing unit; and
a circulating tube arrangement which extends from the scattering particle capturing unit and is connected to the wind box through the moisture removing unit and the gas heating unit, and by which the gas heated by the gas heating unit can be supplied as the drying gas to the wind box.

9. A drying conveyer apparatus according to Claim 7, wherein:

the particles captured by the scattering particle capturing unit are stored in a post-drying hopper together with the dried object taken out from the discharge port of the housing.

10. A drying conveyer apparatus according to Claim 9, wherein:

a heat transfer tube for keeping a moisture content of the stored object within a predetermined range is disposed in the post-drying hopper.

11. A drying conveyer apparatus according to Claim 1, wherein:

a to-be-conveyed object supply unit which inputs the object into the fluidized bed forming conveyance members is provided above one of the paired driving shaft bodies; and
a supply-side closing member which closes the gas jet portion of each of the fluidized bed forming conveyance members having moved onto the supply-side closing member is placed under the to-be-conveyed object supply unit.

12. A drying conveyer apparatus according to Claim 11, wherein:

a discharge-side closing member which closes the gas jet portion of each of the fluidized bed forming conveyance members having moved onto the discharge-side closing member is placed between the other driving shaft body of the paired driving shaft bodies and the most downstream wind box disposed most downstream in the conveyance direction of the object.

13. A drying conveyer apparatus according to Claim 1, further comprising:

a housing which receives a body of the drying conveyer apparatus so as to isolate the body of the drying conveyer apparatus from outside air, the housing including a discharge port for taking out the dried object; and
a cleaning unit which collects the object falling down to an inside bottom of the housing and discharges the collected object from the discharge port.

14. A drying conveyer apparatus according to Claim 1, wherein:

the object is coal, and the drying gas is the air whose temperature has been increased;
the drying conveyer apparatus further comprises:

a housing which receives a body of the drying conveyer apparatus so as to isolate the body of the drying conveyer apparatus from outside air and which has a discharge port for taking out the dried object;
an oxygen concentration meter which detects oxygen concentration in the drying gas; and
an inactive state forming unit which makes at least the interior of the housing inactive; and
the interior of the housing is made inactive by the inactive state forming unit when the oxygen concentration detected by the oxygen concentration meter exceeds a specified value.

15. A drying conveyer apparatus according to Claim 1, wherein:

the object is coal, and the drying gas is the air whose temperature has been increased;
the drying conveyer apparatus further comprises:

a housing which receives a body of the drying conveyer apparatus so as to isolate the body of the drying conveyer apparatus from outside air and which has a discharge port for taking out the dried object;
a carbon monoxide concentration meter which detects carbon monoxide concentration in the drying gas; and
an inactive state forming unit which makes at least the interior of the housing inactive; and
the interior of the housing is made inactive by the inactive state forming unit when the carbon monoxide concentration detected by the carbon monoxide concentration meter exceeds a specified value.

16. A drying conveyer apparatus according to Claim 1, wherein:

the object is coal, and the drying gas is the air whose temperature has been increased;
the drying conveyer apparatus further comprises:

a housing which receives a body of the drying conveyer apparatus so as to isolate the body of the drying conveyer apparatus from outside air and which has a discharge port for taking out the dried object;
a thermometer which detects a temperature of the drying gas; and
an inactive state forming unit which makes at least the interior of the housing inactive; and
the interior of the housing is made inactive by the inactive state forming unit when the temperature detected by the thermometer exceeds a specified value.

17. A drying conveyer apparatus according to any one of Claims 14 through 16, further comprising:

a scattering particle capturing unit which captures scattering particles of pulverized pieces of the object contained in drying gas staying in the housing when the drying gas is introduced to the scattering particle capturing unit; and
a post-drying hopper which stores the dried pulverized pieces discharged from the housing and the fine particles of the pulverized pieces captured by the scattering particle capturing unit; wherein:

the scattering particle capturing unit and the interior of the post-drying hopper are made inactive by the inactive state forming unit when a value detected by the oxygen concentration meter, the carbon monoxide concentration meter or the thermometer exceeds the specified value.

18. A drying conveyer apparatus according to Claim 1, wherein:

the object is coal;
a to-be-conveyed object supply unit which inputs the object into the fluidized bed forming conveyance members is provided above one of the paired driving shaft bodies;
the to-be-conveyed object supply unit includes a pulverizer which pulverizes the object and a pre-drying hopper which stores pulverized pieces of the object;
the drying conveyer apparatus further comprises:

a carbon monoxide concentration meter which detects carbon monoxide concentration in the pre-drying hopper; and
an inactive state forming unit which makes the interior of the pre-drying hopper inactive; and
the interior of the pre-drying hopper is made inactive by the inactive state forming unit when the carbon monoxide concentration detected by the carbon monoxide concentration meter exceeds a specified value.

19. A drying conveyer apparatus according to Claim 1, further comprising:

a pulverizer which pulverizes a raw material of the object so as to set the pulverized raw material as the object; wherein:

the pulverizer includes:

a rotor in which a jet port is formed in a circumferential wall thereof; and
a collision receiver member which is placed to surround the rotor; and
the raw material supplied into the rotor which is rotating is jetted from the jet port by centrifugal force so that the raw material colliding with the collision receiver member can be pulverized.

20. A drying conveyer apparatus according to Claim 1, wherein:

the wind box includes a first wind box, a second wind box and a third wind box which are disposed sequentially from the upstream side to the downstream side in a conveyance direction of the object;
hot air supply tubes each provided with a blower and a heat exchanger are connected to the wind boxes respectively;
a first independent hood, a second independent hood and a third independent hood are disposed above the first wind box, the second wind box and the third wind box so as to be opposed to the first wind box, the second wind box and the third wind box through the fluidized bed forming conveyance members circulated among the first wind box, the second wind box and the third wind box;
exhaust tubes are connected to the independent hoods respectively;
a front end of the exhaust tube connected to the first independent hood is connected to a suction port of the blower provided in the second wind box; and
a front end of the exhaust tube connected to the second independent hood is connected to a suction port of the blower provided in the third wind box.

21. A drying conveyer apparatus according to Claim 20, wherein:

soft plate materials are hung between adjacent ones of the independent hoods so as to face the fluidized bed forming conveyance members which are moving.

22. A drying conveyer apparatus according to Claim 20, wherein:

the size of the wind box disposed downstream in the conveyance direction of the object is larger than the size of the wind box disposed upstream in the conveyance direction of the object.

23. A drying conveyer apparatus according to any one of Claims 1 through 22, wherein:

the object is brown coal.

24. A thermal electric power generation plant comprising:

a conveyer apparatus which conveys coal;
a coal fired boiler apparatus which burns the coal conveyed by the conveyer apparatus so as to generate steam; and
a stream turbine which is rotationally driven by the steam from the coal fired boiler apparatus; wherein:

the conveyer apparatus is a drying conveyer apparatus according to any one of Claims 1 through 22; and
the air whose temperature is increased by the steam extracted from the steam turbine is used as the drying gas for the drying conveyer apparatus.

25. A thermal electric power generation plant comprising:

a conveyer apparatus which conveys coal;
a coal fired boiler apparatus which burns the coal conveyed by the conveyer apparatus so as to generate steam; and
a stream turbine which is rotationally driven by the steam from the coal fired boiler apparatus; wherein:

the conveyer apparatus is a drying conveyer apparatus according to any one of Claims 1 through 22; and
the air whose temperature is increased by exhaust gas discharged from the coal fired boiler apparatus is used as the drying gas for the drying conveyer apparatus.

26. A thermal electric power generation plant according to Claim 24 or 25, wherein:

the coal fired boiler apparatus is a two-pass type boiler apparatus in which a convection heat transfer portion is disposed in a rear part of a furnace so that combustion gas moving up in the furnace can flow to move down in the convection heat transfer portion.

27. A thermal electric power generation plant according to any one of Claims 24 through 26, wherein:

the coal is brown coal.

# FIG. 1

FIG. 2

# FIG. 3

# FIG. 4

# FIG. 5

# FIG. 6

# FIG. 7

FIG. 8

INSTRUCTION SIGNAL FOR MAKING REQUEST TO FEED COAL

EP 2 735 831 A1

FIG. 9

FIG. 10

INSTRUCTION SIGNAL FOR MAKING REQUEST TO FEED COAL

EP 2 735 831 A1

# FIG. 11

EP 2 735 831 A1

# FIG. 12

# FIG. 13

# FIG. 14

# FIG. 15

## FIG. 16

RATIO OF MOISTURE CONTAINED
IN BROWN COAL (−,RAW COAL BASIS)

## FIG. 17

RATIO OF NECESSARY ENERGY (CALORIE) IN
CONVEYER APPARATUS (−,THEORETICAL VALUE BASIS)

FIG. 18

FIG. 19

# FIG. 20

# FIG. 21

| WIND BOX No. | INLET TEMPERATURE Th °C | INLET RELATIVE HUMIDITY % | OUTLET TEMPERATURE T °C | OUTLET ABSOLUTE HUMIDITY H kg_MOISTURE/kg_DRIED AIR |
|---|---|---|---|---|
| — | 20 | 75 | | |
| 1 | 150 | 0.4 | 43 | 0.06 |
| 2 | ↑ | 0.8 | 53 | 0.10 |
| 3 | ↑ | 3.0 | 59 | 0.15 |
| 4 | ↑ | 4.1 | 64 | 0.19 |

# FIG. 22

| | ATMOSPHERE TEMPERATURE °C | HEATING TEMPERATURE °C | |
|---|---|---|---|
| | 20 | 150 | |
| NUMBER OF DIVISIONS | EXHAUST GAS TEMPERATURE °C | AIR FLOW RATE — | THERMAL EFFICIENCY % |
| 1 | 43 | 1 | 82.6 |
| 4 | 64 | 1/4 | 89.6 |
| 10 | 79 | 1/10 | 93.5 |

# FIG. 23

# FIG. 24

# FIG. 25

| | INTERNATIONAL SEARCH REPORT | International application No. |
|---|---|---|
| | | PCT/JP2012/068214 |

**A.  CLASSIFICATION OF SUBJECT MATTER**
*F26B17/04*(2006.01)i, *B65G17/12*(2006.01)i, *F23K1/00*(2006.01)i, *F23K1/04*
(2006.01)i, *F26B3/08*(2006.01)i

According to International Patent Classification (IPC) or to both national classification and IPC

**B.   FIELDS SEARCHED**

Minimum documentation searched (classification system followed by classification symbols)
F26B17/04, B65G17/12, F23K1/00, F23K1/04, F26B3/08

Documentation searched other than minimum documentation to the extent that such documents are included in the fields searched
    Jitsuyo Shinan Koho          1922-1996   Jitsuyo Shinan Toroku Koho    1996-2012
    Kokai Jitsuyo Shinan Koho    1971-2012   Toroku Jitsuyo Shinan Koho    1994-2012

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y | JP 6-70680 A   (Kawasaki Kiko Kabushiki Kaisha), 15 March 1994 (15.03.1994), | 1-3,5,7-20, 22-27 |
| A | entire text; all drawings (Family: none) | 4,6,21 |
| Y | Microfilm of the specification and drawings annexed to the request of Japanese Utility | 1-3,5,7-20, 22-27 |
| A | Model Application No. 183905/1983(Laid-open No. 92093/1985) (Hokoku Kogyo Co., Ltd.), 24 June 1985 (24.06.1985), entire text; all drawings (Family: none) | 4,6,21 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 October, 2012 (10.10.12) | 23 October, 2012 (23.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/068214

C (Continuation).   DOCUMENTS CONSIDERED TO BE RELEVANT

| Category* | Citation of document, with indication, where appropriate, of the relevant passages | Relevant to claim No. |
|---|---|---|
| Y<br><br>A | JP 3111005 U  (Kyokutoh Kousan Corp.),<br>07 July 2005 (07.07.2005),<br>entire text; all drawings<br>(Family: none) | 3,5,11-13,<br>20,22,24-27<br>21 |
| Y<br><br>A | JP 2002-85034 A  (Yugen Kaisha Maruchu Setsubi<br>Kogyo),<br>26 March 2002 (26.03.2002),<br>entire text; all drawings<br>(Family: none) | 3,20,22,<br>24-27<br>21 |
| Y | JP 63-291991 A  (Mitsubishi Heavy Industries,<br>Ltd.),<br>29 November 1988 (29.11.1988),<br>fig. 1 to 3<br>(Family: none) | 7-10,14-18,<br>24-27 |
| Y | JP 2002-86118 A  (Kabushiki Kaisha ESI),<br>26 March 2002 (26.03.2002),<br>paragraph [0013]<br>(Family: none) | 8,24-27 |
| Y | JP 63-15006 A  (Mitsui Engineering &<br>Shipbuilding Co., Ltd.),<br>22 January 1988 (22.01.1988),<br>page 2, upper right column<br>(Family: none) | 9-10,14-19,<br>24-27 |
| Y | JP 2002-22363 A  (Kawasaki Heavy Industries,<br>Ltd.),<br>23 January 2002 (23.01.2002),<br>entire text; all drawings<br>(Family: none) | 14,17,24-27 |
| Y | JP 4-98083 A  (Mitsubishi Heavy Industries,<br>Ltd.),<br>30 March 1992 (30.03.1992),<br>entire text; all drawings<br>(Family: none) | 15-18,24-27 |
| Y | JP 9-173881 A  (David Kepler Brown),<br>08 July 1997 (08.07.1997),<br>entire text; all drawings<br>& US 5597127 A        & EP 756896 A1<br>& CN 1151909 A | 19,24-27 |
| Y | JP 2010-523935 A  (Great River Energy),<br>15 July 2010 (15.07.2010),<br>entire text; all drawings<br>& US 2006/75682 A1      & WO 2006/042308 A2 | 24-27 |

Form PCT/ISA/210 (continuation of second sheet) (July 2009)

**INTERNATIONAL SEARCH REPORT**

International application No.

PCT/JP2012/068214

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2005-265300 A (Ishikawajima-Harima Heavy Industries Co., Ltd.), 29 September 2005 (29.09.2005), paragraph [0029] (Family: none) | 26 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61240024 A
- JP 59107115 A
- JP 50003225 A
- JP 61221289 A